# EUROPÄISCHE PATENTSCHRIFT

(11) **EP 3 173 757 B1**
(45) Veröffentlichungstag und Bekanntmachung des Hinweises auf die Patenterteilung: **05.06.2019**
(21) Anmeldenummer: 16195659.4
(22) Anmeldetag: 26.10.2016
(51) Int. Cl.: G01L 1/20, G01L 1/22, G01L 5/00, F16P 3/12, H01H 3/14, B25J 19/06

(54) **DRUCKEMPFINDLICHE SCHUTZEINRICHTUNG ZUR ÜBERWACHUNG EINER TECHNISCHEN ANLAGE**
PRESSURE-SENSITIVE PROTECTION DEVICE FOR MONITORING TECHNICAL FACILITIES
DISPOSTIF DE PROTECTION SENSIBLE À LA PRESSION POUR LA SURVEILLANCE DES INSTALLATIONS

(30) Priorität: 25.11.2015 DE 102015120368
(43) Veröffentlichungstag der Anmeldung: 31.05.2017
(73) Patentinhaber: Pilz GmbH & Co. KG, 73760 Ostfildern (DE)
(72) Erfinder: Ibrocevic, Onedin, 73760 Ostfildern (DE); Kuczera, Matthias, 73760 Ostfildern (DE); Schweiker, Matthias, 73760 Ostfildern (DE)
(74) Vertreter: Witte, Weller & Partner Patentanwälte mbB

(56) Entgegenhaltungen:
- WO-A1-99/60357
- US-A- 4 555 954
- US-A- 4 795 998
- US-A- 4 839 512
- US-A1- 2011 227 836

## Beschreibung

Die vorliegende Erfindung betrifft einen Signalgeber zur Überwachung einer technischen Anlage mit einem Sensor, der mindestens eine erste Sensorzelle und eine zweite Sensorzelle aufweist, mit einer ersten, zweiten und dritten Elektrode zum Kontaktieren der ersten und zweiten Sensorzelle, wobei die erste und zweite Elektrode in einer ersten Ebene angeordnet sind und die dritte Elektrode in einer zweiten Ebene angeordnet sind, mit einem druckempfindlichen Material innerhalb der ersten und zweiten Sensorzelle, welches bei lokaler Belastung seinen spezifischen elektrischen Widerstand im Ort der Belastung ändert, wobei die erste und die zweite Ebene durch das druckempfindliche Material voneinander beabstandet sind, und mit einer Auswerteeinheit, die dazu ausgebildet ist, ein Ausgangsignal in Abhängigkeit der Betätigung der ersten und zweiten Sensorzellen bereitzustellen, wobei die erste Elektrode mit der ersten Sensorzelle verbunden ist, die zweite Elektrode mit der zweiten Sensorzelle verbunden ist und die dritte Elektrode sowohl mit der ersten als auch mit der zweiten Sensorzelle verbunden ist.

Ein solcher Sensor ist grundsätzlich aus der US 2011/227836 A1, US 4,555,954 A oder US 4,839,512 A bekannt.

Durch Fortschritte in der Signalerfassung und primär elektronischen Signalverarbeitung hat sich der Grad der Automatisierung von Fertigungsprozessen über die Jahre kontinuierlich erhöht. Dennoch sind und bleiben Eingriffe durch den Mensch wesentlicher Bestandteil eines Fertigungsprozesses, sodass sich die Entwicklung in den letzten Jahren vermehrt auf eine Optimierung der Zusammenarbeit zwischen Mensch und Maschine konzentriert. Insbesondere darf bei der Zusammenarbeit von Mensch und Maschine keine Gefahr für den Menschen ausgehen. Eine Maschine muss daher in die Lage versetzt werden, in ihrem Wirkungsbereich ihre Umwelt wahrzunehmen und zu erkennen, ob sich ein Gegenstand oder eine Person in unmittelbarer Nähe befindet. Neben einer umfangreichen Sensorik, mit welcher die Maschine ihre Umgebung wahrnimmt, bedarf es hierzu auch einer fehlerfreien und sicheren Auswertung dieser erfassten Signale, um ein sicheres Hand-in-Hand-Arbeiten von Mensch und Maschine zu ermöglichen.

Ein Sensor, mit dem der Zugang zu einer Maschine oder eine Berührung mit der Maschine erkannt werden kann, ist beispielsweise aus EP 2 528 234 B1 bekannt. EP 2 528 234 B1 zeigt einen großflächigen, taktilen Sensor, der durch Zusammenschalten einer Vielzahl von einzelnen Sensorzellen realisiert ist, die bei mechanischer Belastung in definierter Weise ihre elektrische Eigenschaft verändern. Die Sensorzellen sind über in Spalten und Reihen angeordnete Elektroden einzeln kontaktierbar, um aus den Änderungen in den einzelnen Zellen eine Druckverteilung über die gesamte Fläche zu bestimmen. Der Sensor kann als Trittmatte in einem Zugangsbereich zu einer Maschine verwendet werden oder aber auf der Oberfläche einer Maschine angeordnet sein, um als künstliche Haut Zusammenstöße zwischen Mensch und Maschine oder einem Gegenstand zu erkennen. Für derartige druckempfindliche Schutzeinrichtungen sind die allgemeinen Grundsätze und Anforderungen an die Gestaltung und Prüfung in der EN ISO 13856-1 festgelegt. Insbesondere sind in der Norm die Mindestsicherheitsanforderungen in Bezug auf die Leistungsfähigkeit, Kennzeichnung und Dokumentation angegeben.

Je mehr Sensorzellen zusammengeschaltet werden, umso höher ist die lokale Auflösung des Sensors, allerdings auch der Aufwand der Signalauswertung. Üblicherweise erfolgt die Auswertung einer größeren Anzahl an Sensorzellen nicht zeitgleich und parallel, sondern sequentiell, d.h. die einzelnen Sensorzellen werden kontinuierlich nacheinander durch eine Auswerteeinheit abgefragt. Dies setzt jedoch mindestens ein weiteres Glied zur Sequentialisierung in der Signalverarbeitungskette voraus, wodurch die Komplexität der Signalverarbeitung im Signalgeber und zwangsläufig die Anzahl der potentiellen Fehlerquellen steigt.

DE 10 2012 203 670 A1 offenbart eine Schaltungsanordnung, die eine eigenständige Überwachung eines Sequentialisierungselements ermöglicht. Die Schaltungsanordnung wird in dem Sequentialisierungselement integriert und führt einen umfassenden Selbsttest des Sequentialisierungselements durch. Der Selbsttest kann kontinuierlich in Intervallen erfolgen oder nach Bedarf von einer übergeordneten Steuereinheit initiiert werden. Das Ergebnis der Überprüfung wird einer übergeordneten Steuereinheit zu geführt oder dem Anwender angezeigt. Die Lösung ermöglicht einen umfassenden Schutz vor Fehlern innerhalb des Sequentialisierungselements oder dessen Adressierung, setzt aber sehr komplex aufgebaute und somit auch teure Sequentialisierungselemente voraus.

Es ist somit eine Aufgabe der vorliegenden Erfindung, einen Signalgeber zur Überwachung einer technischen Anlage anzugeben, der einfacher aufgebaut und kostengünstiger in der Herstellung ist und dennoch eine ausreichende Überprüfbarkeit der Signalverarbeitung ermöglicht.

Gelöst wird diese Aufgabe durch einen Signalgeber eingangs genannter Art mit einem ersten und einem zweiten Sequentialisierungselement und mit einem Anschluss zum Zuführen eines definierten ersten Potentials, wobei das erste und zweite Sequentialisierungselement überbelegt sind, indem über das erste Sequentialisierungselement die erste und zweite Elektrode der ersten Ebene und die dritte Elektrode der zweiten Ebene mit der Auswerteeinheit verbunden sind und indem über das zweite Sequentialisierungselement die erste und zweite Elektrode der ersten Ebene und die dritte Elektrode der zweiten Ebene mit dem definierten ersten Potential verbunden sind.

Es ist somit eine Idee der vorliegenden Erfindung, die Sequentialisierungselemente überzubelegen, um neben dem eigentlichen Messvorgang auch einen Selbsttest der Sequentialisierungselemente durch die Auswerteeinheit zu ermöglichen. Mit anderen Worten werden bei einer matrixartigen Anordnung der Elektroden des Sensors nicht nur die Elektroden der Spalten bzw. der Reihen jeweils über ein Sequentialisierungselement zusammengefasst, sondern jedes Sequentialisierungselement ist mit allen Elektroden der Spalten und Reihen verbunden.

Der Signalgeber lässt sich mit einer Vielzahl von Sensorzellen leicht herstellen. Die erste Ebene und die zweite Ebene sind im Wesentlichen identisch und können in einem Stück gefertigt werden. Durch das Übereinanderlegen der beiden Schichten entsteht die matrixartige Anordnung der Sensorzellen, welche in den Schnittpunkten der Elektroden der ersten und zweiten Ebene ausgebildet sind. Die elektrischen Eigenschaften der Sensorzellen bestimmt sich aus dem druckempfindlichen Material, welches durchgängig zwischen den beiden Schichten angeordnet ist. Der Sensor wird somit vorteilhaft nur aus drei Grundelementen zusammengesetzt.

Ein Sequentialisierungselement schaltet abwechselnd die mit den Elektroden belegten Eingänge an einen einzelnen Ausgang durch. Dabei werden am ersten Sequentialisierungselement die Elektroden der Spalten und am zweiten Sequentialisierungselement die Elektroden der Reihen der matrixförmigen Zusammenschaltung der Sensorzellen zusammengefasst, sodass an den Ausgängen je eine Sensorzelle, die sich im Kreuzungspunkt der beiden ausgewählten Elektroden befindet, ausgemessen werden kann. So können nacheinander alle Sensorzellen abgefragt werden, indem das erste Sequentialisierungselement nacheinander die Elektroden der Zeilen auf den Ausgang schaltet und das zweite Sequentialisierungselement nacheinander die Elektroden der Spalten auf den Ausgang schaltet.

Durch die Überbelegung der Sequentialisierungselemente, d.h. durch die Belegung der Sequentialisierungselemente sowohl mit den Elektroden der Reihen als auch der Spalten, können die Sensorzellen überbrückt werden. Ein gleichzeitiges Schalten der Sequentialisierungselemente auf dieselbe Elektrode stellt somit eine unmittelbare elektrische Verbindung zwischen dem Ausgang des ersten Sequentialisierungselements und dem Ausgang des zweiten Sequentialisierungselements her. Der entstandene "Kurzschluss" zwischen den Ausgängen ist messtechnisch bestimm- und abfragbar, d.h. es wird eine bestimmter Messwert zwischen den Ausgängen erwartet, der anliegen muss, wenn eine unmittelbare Verbindung zwischen den Ausgängen besteht. Weicht der durch die Messung bestimmte Wert von dem erwarteten Wert ab, liegt ein Fehler in der Adressierung des ersten oder des zweiten Sequentialisierungselements vor, was vorteilhaft durch die vorhandene Auswerteeinheit bestimmt werden kann. Die Auswerteeinheit stellt ein Ausgangssignal in Abhängigkeit der Auswertung der Sensorzellen und des Selbsttest bereit, anhand welches eine übergeordnete Steuereinheit die Maschine bei einem Fehler in einen sicheren Zustand überführen kann.

Der Selbsttest der Sequentialisierungselemente erfolgt somit vorteilhaft ohne zusätzliche Bauteile oder Überwachungsschaltungen. Lediglich die Eingangsbreite der Sequentialisierungselemente wird vergrößert, sodass allen Elektroden der Spalten und Reihen jeweils ein Eingang an dem ersten und zweiten Sequentialisierungselement zugeordnet werden kann. Dies ist jedoch kostengünstiger, als eine separate Überwachungsschaltung an jedem Sequentialisierungselement vorzusehen.

Vorteilhaft ist weiterhin, dass für den Selbsttest die bereits vorhandene Auswerteeinheit herangezogen werden kann und keine zusätzlichen Testeinrichtungen benötigt werden. Ebenso ist die Überwachung leicht in den normalen Messablauf integrierbar, indem im Anschluss an eine Messung der Sensorzellen die Sequentialisierungselemente auf dieselbe Elektrode geschaltet werden, um deren Adressierung zu prüfen. Die Überwachung kann somit auf einfache Weise kontinuierlich im Anschluss an eine Messung erfolgen.

Schließlich ermöglicht die Überbelegung der Sequentialisierungselemente zusätzliche Testmöglichkeiten in der Signalverarbeitungskette, da der Sensor vollständig aus der Signalverarbeitungskette ausgeblendet werden kann. Vorteilhafterweise können so auch die Eingänge der Auswerteeinheit auf ihre Funktionsfähigkeit hin überprüft werden.

Somit ermöglicht der neue Signalgeber einerseits eine einfache und kostengünstige Überwachung der Sequentialisierungselemente einer matrixförmigen Sensoranordnung und andererseits lassen sich auf einfache Weise weitere Elemente der Signalverarbeitungskette prüfen, indem der Sensor "überbrückt" wird. Die oben genannte Aufgabe ist damit vollständig gelöst.

In einer vorteilhaften Ausgestaltung weist der Signalgeber einen Widerstand auf, der zwischen dem Anschluss des ersten Potentials und dem zweiten Sequentialisierungselement angeordnet ist. Die Weiterbildung hat den Vorteil, dass auf einfache Weise ein fester Erwartungswert für die Überprüfung der Sequentialisierungselement festgelegt werden kann. Insbesondere wenn das erste Potential ein Massepotential ist, ist ein Widerstand notwendig, um eine sinnvolle Messung durchführen zu können. Ist darüber hinaus der Ausgang des ersten Sequentialisierungselements mit einer konstanten Spannungsquelle belegt, ergibt sich der Erwartungswert gerade aus dem Spannungsabfall über den Widerstand, wenn die Sequentialisierungselemente ordnungsgemäß auf einen "Kurzschluss" geschaltet sind. Schalten die Sequentialisierungselemente fehlerhaft oder liegt eine fehlerhafte Adressierung vor, weicht die gemessene Spannung von der erwarteten ab.

In einer weiteren vorteilhaften Ausgestaltung ist der eine Widerstand variabel einstellbar. Diese Ausgestaltung hat den Vorteil, dass der Erwartungswert für unterschiedliche Messvorgänge angepasst werden kann. So kann bspw. der Widerstand beim Ausmessen der Sensorzellen verringert werden, um die Verlustleistung zu minimieren, während bei dem Selbsttest der Sequentialisierungselemente ein höherer Widerstand eine präzisere Messung ermöglicht.

In einer weiteren vorteilhaften Ausgestaltung weist der Signalgeber einen weiteren Anschluss zum Zuführen eines zweiten Potentials auf, wobei der Anschluss des zweiten Potentials über einen Vorwiderstand parallel zur Auswerteeinheit mit dem ersten Sequentialisierungselement verbunden ist. Diese Weiterbildung hat den Vorteil, dass eine Messung weiter verbessert wird, indem der Erwartungswert durch zwei Widerstände bestimmt wird und die Messung an dem daraus resultierenden Spannungsteiler erfolgt.

In einer weiteren vorteilhaften Ausgestaltung ist auch der Vorwiderstand variabel. Diese Weiterbildung hat den Vorteil, dass neben der freien Wahl des Erwartungswerts ergänzend auch die Auswerteeinheit, insbesondere ein am Eingang der Auswerteeinheit befindlicher Analog-Digital-Wandler, über den gesamten Messbereich getestet werden kann, indem der Spannungsteiler entsprechend angepasst wird. Dies ist dann möglich, wenn durch geeignetes Schalten der Sequentialisierungselemente die Sensorzellen ausgeblendet werden, und somit nur der variable Spannungsteiler an der Auswerteeinheit anliegt. So ist auf einfache Weise eine zusätzliche Überwachungsfunktion der Auswerteeinheit gegeben.

In einer weiteren vorteilhaften Ausgestaltung weist der Signalgeber ferner eine erste Orientierung der ersten und zweiten Elektrode und eine zweite Orientierung der dritten Elektrode sowie einen Zwischenbereich auf, wobei der Zwischenbereich die erste und zweite Elektrode in der ersten Ebene voneinander beabstandet und elektrisch isoliert. Die Weiterbildung hat den Vorteil, dass die Elektroden im Wesentlichen streifenartig ausgebildet sein können und die Form einer Sensorzelle im Wesentlichen durch die Orientierung der Elektroden zueinander bestimmt wird. Die unterschiedliche Orientierung der Elektroden ergibt sich vorteilhaft aus dem Winkel, in dem die Elektroden zueinander angeordnet sind. Vorzugsweise sind die Elektroden der ersten und zweiten Schicht orthogonal zu einander angeordnet, um rechteckige Sensorzellen zu erzeugen. Durch den Zwischenbereich können die Breite und insbesondere der Abstand der Sensorzellen zueinander bestimmt werden.

In einer weiteren vorteilhaften Ausgestaltung weist der Signalgeber ferner eine weitere Leiterbahn und eine Durchkontaktierung auf, wobei die weitere Leiterbahn in dem Zwischenbereich angeordnet ist und die erste Orientierung aufweist und die Durchkontaktierung die weitere Leiterbahn mit der dritten Leiterbahn elektrisch verbindet. Diese Weiterbildung hat den Vorteil, dass sowohl die Kontaktierungen der Elektroden der ersten Ebene und der Elektroden der zweiten Ebene auf einer Ebene vereinheitlicht sind. Durch die weitere Leiterbahn mit derselben Orientierung wie die Elektroden auf der ersten Ebene können die Anschlüsse, mit denen die Elektroden kontaktiert werden, für alle Elektroden vorteilhaft auf einer Seite des Sensors angeordnet sein. Das heißt, die Kontaktierungen sowohl der ersten und zweiten Elektrode der ersten Ebene sowie der dritten Elektrode der zweiten Ebene können einheitlich an einer Stelle auf der ersten Ebene herausgeführt sein. Hierdurch wird eine erfindungsgemäße Zusammenführung der Elektroden sowohl durch das erste als auch das zweite Sequentialisierungselement besonders einfach möglich.

In einer weiteren vorteilhaften Ausgestaltung sind die erste Ebene und die zweite Ebene aus Gewebe mit elektrisch leitfähigem und elektrisch nicht-leitfähigem Garn gebildet, wobei die erste, zweite und dritte Elektrode aus leifähigem Garn in das Gewebe eingewoben sind. Diese Weiterbildung hat den Vorteil, dass ein großflächiger, flexibler Sensor auf einfache Weise erstellt werden kann. Insbesondere lassen sich die streifenartigen Elektroden einfach fertigen, indem beim Weben wahlweise ein elektrisch leitfähiges oder elektrisch nicht-leitfähiges Garn verwendet wird. So entsteht eine Stoffbahn mit streifenartigen Elektroden und isolierenden Zwischenräumen.

In einer weiteren vorteilhaften Ausgestaltung ist das druckempfindliche Material ein elektrisch nicht-leitfähiges flexibles Material, das siebförmig ausgebildet ist und sich unter mechanischer Belastung verformt, sodass sich die erste und zweite Elektrode der ersten Schicht mit der dritten Elektrode in der zweiten Schicht im Bereich der mechanischen Belastung partiell berühren können. Diese Weiterbildung hat den Vorteil, dass der Widerstand einer Sensorzelle nicht von den intrinsischen elektrischen Eigenschaften des druckempfindlichen Material abhängt, sondern ausschließlich von dessen Elastizität und der Größe und Form des siebförmigen Gitters. Der spezifische Widerstand des druckempfindlichen Materials bestimmt sich somit aus der Anzahl der Berührungen der durch das druckempfindliche Material beabstandeten Elektroden. Je mehr Berührungspunkte durch das mechanische Belasten des druckempfindlichen Materials im Bereich einer Sensorzelle entstehen, desto geringer ist der elektrische Widerstand der Sensorzelle.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1:: eine schematische Darstellung möglicher Anwendungsgebiete von Ausführungsbeispielen der neuen Schutzeinrichtung,
- Fig. 2:: eine perspektivische Darstellung eines Ausführungsbeispiels einer neuen Trittmatte,
- Fig. 3:: ein Ausführungsbeispiel eines Sensors einer neuen Trittmatte,
- Fig. 4:: eine schematische Darstellung eines weiteren Ausführungsbeispiels eines Sensors,
- Fig. 5:: eine explosionsartige Darstellung eines Ausführungsbeispiels einer neuen Trittmatte,
- Fig. 6:: eine Schnittzeichnung eines Ausführungsbeispiels einer neuen Trittmatte,
- Fig.7:: eine schematische Darstellung eines Ausführungsbeispiels einer Anschlussschaltung eines Sensors,
- Fig. 8:: eine schematische Darstellung eines bevorzugten Ausführungsbeispiels einer Anschlussschaltung eines Sensors, und
- Fig. 9:: ein bevorzugtes Ausführungsbeispiel einer Unterseite einer neuen Trittmatte in einer perspektivischen Darstellung.

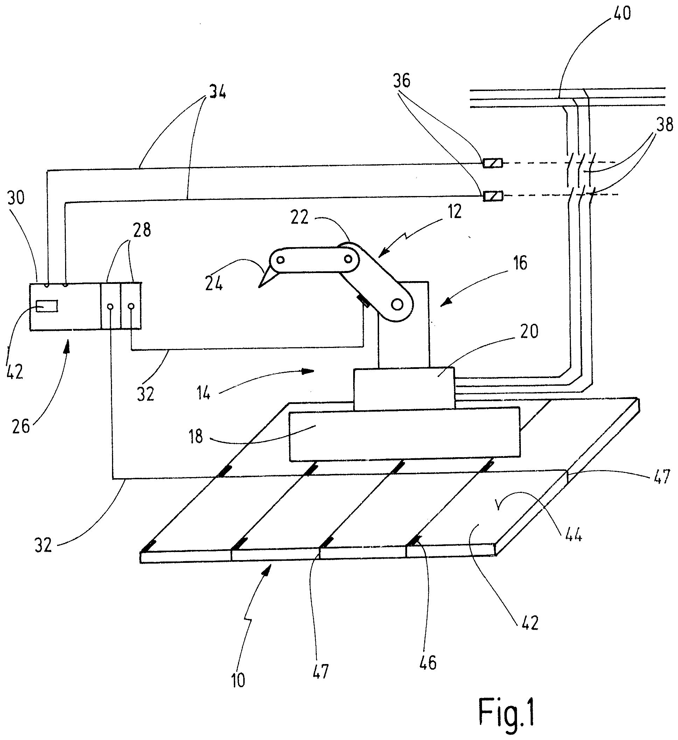

In der Fig. 1 sind ein erste druckempfindliche Schutzeinrichtung und ein zweite druckempfindliche Schutzeinrichtung in ihrer Gesamtheit mit den Bezugsziffern 10 und 12 gekennzeichnet. Die erste und zweite druckempfindliche Schutzeinrichtung dienen der Absicherung einer technischen Anlage 14, die hier als ein automatisiert arbeitender Roboter 16 angedeutet ist. Bei dem Roboter 16 kann es sich beispielsweise um einen Schneid- oder Schweißroboter in einer Fertigungs- oder Montagelinie handeln.

Der Roboter 16 ist auf einer Halterung 18 montiert und über einen Antrieb 20 um die eigene Achse drehbar. Ferner weist der Roboter 16 einen Roboterarm 22 auf, an dessen Ende sich ein Werkzeug 24 befindet. Der Dreh- und Schwenkbereich des Roboterarms 22 definiert einen Wirkungsbereich des Roboters 16, der gleichzeitig einem Gefahrenbereich des Roboters 16 entspricht. Ein Eintreten in diesen Bereich - sowohl unberechtigtes als auch berechtigtes - muss erkannt werden, sodass der Roboter in einen für Personen ungefährlichen Zustand überführt werden kann. Die Erkennung erfolgt hier durch die druckempfindlichen Schutzeinrichtungen 10 und 12, die mit einem Sicherheitssystem 26 gekoppelt sind. Das Sicherheitssystem 26 kann eine Ausgangsschalteinrichtung im Sinne der EN ISO 13856-1 sein, bspw. ein einfaches Sicherheitsschaltgerät, eine konfigurierbare Sicherheitssteuerung oder aber eine programmierbare Steuereinheit. Das Sicherheitssystem 26 ist dazu ausgebildet, die technische Anlage 14 in einem für Personen ungefährlichen Zustand zu überführen, beispielsweise indem die technische Anlage stromlos geschaltet wird.

In der Fig. 1 ist ein modulares Sicherheitssystem 26 dargestellt, welches Eingangsmodule 28 und ein Ausgangsmodul 30 aufweist. Die Eingangsmodule 28 sind über Leitungen 32 mit den druckempfindlichen Schutzeinrichtungen 10, 12 gekoppelt. Im vorliegenden Ausführungsbeispiel ist das Ausgangsmodul 30 über eine redundante Leitung 34 mit Schützen 36 verbunden, deren Arbeitskontakte 38 in einer Stromversorgung 40 des elektrischen Antriebs 20 angeordnet sind. In Abhängigkeit der an den Eingangsmodulen 28 anliegenden Signale der druckempfindlichen Schutzeinrichtungen 10, 12 steuert eine Verarbeitungseinheit 42 die Schütze 36 an, um den Roboter 16 bei Gefahr stromlos zu schalten. Es versteht sich, dass das Stromlosschalten der technischen Anlage 14 nur eine Möglichkeit darstellt, die technische Anlage in einen sicheren Zustand zu überführen. Alternativ oder ergänzend kann in einem anderen Ausführungsbeispiel das Sicherheitssystem 26 auch steuernd in den Bewegungsablauf des Roboters 16 eingreifen, um einen sicheren Zustand herzustellen, beispielsweise indem der Roboter 16 den Roboterarm 22 einzieht. Ebenso ist es denkbar, dass die Verarbeitungseinheit 42 die Signale der ersten druckempfindliche Schutzeinrichtung 10 und der zweiten druckempfindliche Schutzeinrichtung 12 oder weitere Schutzeinrichtungen kombiniert betrachtet und aus der Zusammenschau eine Entscheidung über die Ansteuerung des Roboters 16 trifft. Weitere Schutzeinrichtungen können bspw. berührungslos wirkende Schutzeinrichtungen (BWS) wie Lichtschranken oder Lichtgitter sein oder aber ein sicheres Kamerasystem.

Im Ausführungsbeispiel gemäß Fig. 1 ist die erste druckempfindliche Schutzeinrichtung 10 eine Trittmatte, insbesondere eine Schaltmatte im Sinne der EN ISO 13856-1, die auf dem Boden rund um die Halterung 18 des Roboters 16 verlegt ist. Die Trittmatte ist in diesem Ausführungsbeispiel modular aufgebaut und weist hier acht Trittmattenmodule 42 auf, die in zwei Reihen zu je vier Modulen zusammengesetzt sind. Jedes Trittmattenmodul 42 weist einen Sensor mit einer aktiven Sensorfläche 44 und einer Auswerteeinheit 46 auf. Die aktive Sensorfläche 44 ist druckempfindlich ausgebildet, wie anhand der nachfolgenden Figuren im Einzelnen noch näher erläutert wird. Die Auswerteeinheit 46 ist dazu ausgebildet, eine Belastung der druckempfindlichen aktiven Sensorfläche 44 zu registrieren und in Abhängigkeit davon ein Ausgangssignal bereitzustellen. Die Auswerteeinheit 46 kann eine digitale oder analoge Schaltung, ein Mikrocontroller, ein FPGA, ein ASIC oder eine jede andere Signalverarbeitungseinheit sein.

Das Ausgangssignal der Auswerteeinheit 46 ist in diesem Ausführungsbeispiel ein Signal, welches einen ersten Zustand und einen zweiten Zustand anzeigen kann. Vorzugsweise wird der sichere Zustand durch ein aktives Ausgangssignal (always on) angezeigt. Das Ausgangssignal ist besonders bevorzugt ein OSSD-Signal, d.h. ein redundantes Signal mit zwei Taktsignalen, die zueinander nicht synchron sind. Die Ausgangssignale der einzelnen Auswerteeinheiten 46 können einzeln oder zusammengefasst über die Leitung 32 zum Eingangsmodul 28 des Sicherheitssystems 26 übertragen werden. Bleibt das Ausgangssignal aus oder erreicht das Ausgangsignal das Eingangsmodul 28 nicht in der erwarteten Form, wird die zuvor beschriebene Sicherheitsfunktion von dem Sicherheitssystem 26 ausgeführt und die technische Anlage 14 über die Schütz 36 stromlos geschaltet.

Die aus den einzelnen Trittmattenmodulen 42 zusammengesetzte Trittmatte weist eine im Wesentlichen durchgängige Sensoroberfläche auf, die aus den einzelnen aktiven Sensorflächen 44 der Trittmattenmodule 42 gebildet ist. Im Wesentlichen durchgängig bedeutet, in diesem Zusammenhang, dass eine sicherheitsrelevante Erkennung auch in den Übergangsbereichen von benachbarten Trittmatten erfolgen kann und die passiven Randbereiche entsprechend minimiert sind. Ein Trittmattenmodul 42 weist im Ausführungsbespiel gemäß Fig. 1 einen quaderförmigen Trägerkörper mit einer ausgedehnten Basis auf. Die Basis weist eine im Verhältnis zu den Seitenflächen großflächigen Ober- und Unterseite auf. Die aktive Sensorfläche 44 der Trittmattenmodule 42 bedeckt die Oberseite der Basis vollständig. Die wirksame Betätigungsfläche des Trittmattenmoduls erstreckt sich somit nahezu über die gesamte Oberfläche des Trittmattenmoduls 42. Im Verbund mehrerer Trittmattenmodule reicht die wirksame Betätigungsfläche bis an die Stoßfugen 47 zweier benachbarter Trittmattenmodulen 42, um eine nahezu nahtlose Betätigungsfläche der Trittmatte zu bilden. In einem Ausführungsbeispiel weist der Trägerkörper zusätzlich einen schmalen Rand auf, der die Basis umläuft, um eine weitere Schutzschicht auf diesen Rand zu befestigen, um eine besonders hohe Schutzart (IP67) zu erreichen.

Zur Erkennung einer Betätigung der Trittmatte werden auch die Auswerteeinheiten 46 der einzelnen Trittmattenmodule 42 zu einem Verbund zusammengeschaltet. Dies erfolgt vorzugsweise unterhalb der aktiven Sensorflächen 44 im Inneren der Trittmattenmodule 42 oder an deren Unterseite. In einem Ausführungsbeispiel sind die Auswerteeinheiten 46 in Serie geschaltet, wobei die erste oder letzte Auswerteeinheit 46 der Kette mit dem Eingangsmodul eines Sicherheitssystems verbunden ist. Die Serienschaltung ist so ausgebildet, dass sobald ein Ausgangssignal einer Auswerteeinheit 46 ausbleibt, für die gesamte Trittmatte eine Betätigung an das angeschlossene Sicherheitssystem signalisiert wird. In anderen Ausführungsbeispielen sind aber auch andere Verknüpfungen der Auswerteeinheiten 46, bspw. ein Master- und Slave-Verbund, sowie eine andere Signalverarbeitung denkbar. So können in einem Ausführungsbeispiel auch die durch die einzelnen Auswerteeinheiten 46 erfassten Werte unmittelbar an das Sicherheitssystem weitergeleitet werden, welches selbstständig entscheidet, wie die Betätigung eines Trittmattenmoduls zu werten ist.

Im Ausführungsbeispiel gemäß Fig. 1 ist die technische Anlage 14 auf der Trittmatte und der wirksamen Oberfläche angeordnet. In anderen bevorzugten Ausführungsbeispielen ist die Trittmatte, um die Halterung 18 der technischen Anlage 14 herum angeordnet. Steht die Anlage auf der wirksamen Oberfläche, müssen die Trittmatte bzw. die einzelnen Trittmattenmodule so ausgebildet sein, dass die Bereich auf denen die technische Anlage 14 steht ausgeblendet werden können. Mit anderen Worten muss die Trittmatte ortsauflösend sein, um zu erkennen, welche Bereiche der aktiven Sensorfläche betätigt worden sind. Mittels der Ortsauflösung können dann einzelnen Bereiche, auf denen die technische Anlage 14 steht, bei der Auswertung unberücksichtigt bleiben.

Der zweite Signalgeber 12 weist in dem Ausführungsbeispiel gemäß Fig. 1 ebenfalls eine aktive Sensoroberfläche 44 sowie eine mit einem Eingangsmodul 28 des Sicherheitssystems 26 über die Leitung 32 verbundene Auswerteeinheit 46 auf. Die aktive Sensorfläche 44 des zweiten Signalgebers 12 ist hier auf einer Oberfläche der technischen Anlage 14, insbesondere auf dem Roboterarm 22 angeordnet. Die aktive Sensoroberfläche 44 ist flexibel und an die Kontur der Oberfläche der technischen Anlage 14 angepasst. Wie bei der Trittmatte können auch in diesem Ausführungsbeispiel mehrere aktive Sensorflächen 44 zu einem Verbund zusammengeschaltet werden, um die wirksame Betätigungsfläche zu vergrößern. Vorzugweise ist der im Raum bewegliche Teil des Roboters vollständig von der aktiven Sensoroberfläche 44 bedeckt.

Im Ausführungsbeispiel gemäß Fig. 1 weist der Roboterarm 22 zwei zylinderförmige Komponenten auf, auf deren zylindrischer Oberfläche die aktive Sensoroberfläche 44 angeordnet ist. Der zweite Signalgeber 12 ist im Gegensatz zum ersten Signalgeber 10 dazu ausgebildet, nicht den Zugang zur technischen Anlage 14 zu überwachen, sondern eine Berührung des Roboterarms 22 mit einem Gegenstand oder einer Person zu detektieren. Wie beim ersten Signalgeber 10 erzeugt auch die Auswerteeinheit 46 des zweiten Signalgebers ein Ausgangssignal, in dessen Abhängigkeit das Sicherheitssystem 26 den Roboter 16 steuern, insbesondere stromlos schalten kann. Der technische Aufbau des ersten und des zweiten Signalgebers 10, 12 wird anhand der nachfolgenden Figuren näher erläutert. Gleiche Bezugszeichen bezeichnen gleiche Teile.

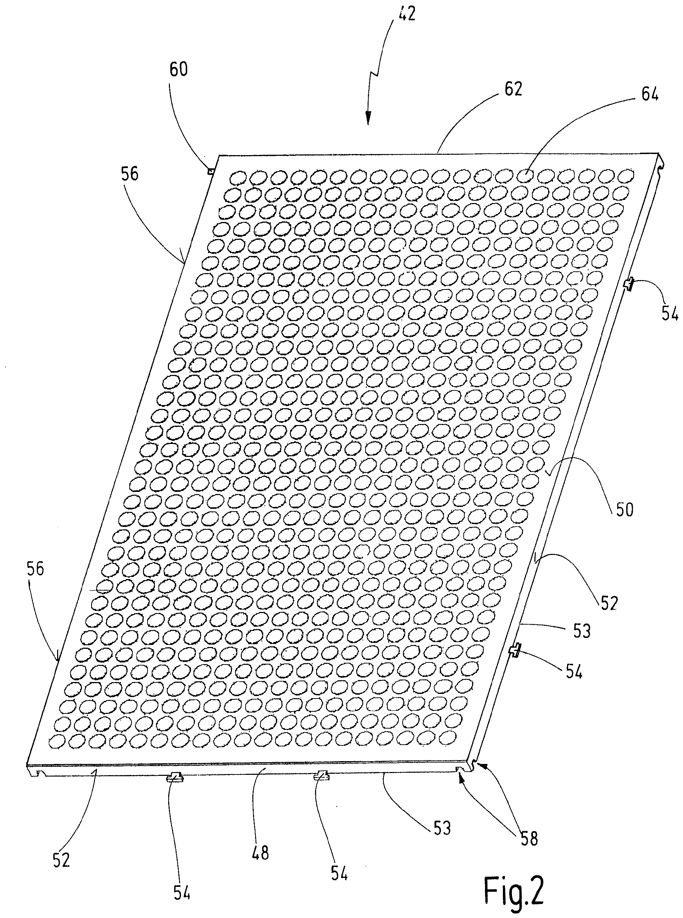

Fig. 2 zeigt eine perspektivische Darstellung eines Ausführungsbeispiels eines Trittmattenmoduls 42 der in Fig. 1 gezeigten ersten druckempfindlichen Schutzeinrichtung 10. Das Trittmattenmodul 42 weist einen starren Trägerkörper 48 mit einer großflächigen, ebenen Oberfläche 50 sowie schmalen zur Oberfläche 50 senkrecht stehenden Seitenflächen 52 auf. Im Ausführungsbeispiel gemäß Fig. 2 ist die ebene Oberfläche 50 rechteckig und das Trittmattenmodul 42 insgesamt quaderförmig ausgebildet, d.h. die Oberfläche 50, die Unterseite sowie die Seitenflächen 52 sind orthogonal zueinander angeordnet. Es versteht sich, dass in anderen Ausführungsbeispielen auch andere Formen denkbar sind. Insbesondere sind eine dreieckige, rautenförmige oder hexagonale Form der Oberfläche denkbar, also insbesondere Formen, mit denen eine Ebene lückenlose ausgefüllt (parkettiert) werden kann.

Im Ausführungsbeispiel gemäß Fig. 2 ist das Trittmattenmodul 42 60 cm breit und 1 m tief und 3 cm hoch. Vorzugsweise ist die Oberfläche 50 zwischen 0,25 m² und 1 m² groß. Dieses Maß ist besonders geeignet die Trittmattenmodule 42 wie normale Fliesen zu verlegen. Im vorliegenden Ausführungsbeispiel sind an zwei Seitenkanten 53 zu der Unterseite des Trittmattenmoduls T-förmige Verbindungselemente 54 angeordnet, die senkrecht von dem Trittmattenmodul 42 abstehen. An den zwei Seitenkanten 53 gegenüberliegenden Seitenkanten sind den Verbindungselementen 54 gegenüberliegende Aufnahmen 56 angeordnet. Die Aufnahmen 56 sind den Verbindungselementen 54 entsprechende, T-förmige Aussparungen an der Unterseite des Trägerkörpers 48, sodass zwei benachbarte Trittmattenmodule 42 bündig aneinander liegen und fixiert werden können, indem die Aufnahmen 56 und die Verbindungselemente 54 ineinandergreifen. Es versteht sich, dass in anderen Ausführungsbeispielen andere Verbindungsvorrichtungen denkbar sind. So können in einem Ausführungsbeispiel die Verbindungselemente separate Bauteile mit einer doppel-T-förmigen Kontur sein, die bei Bedarf in die Aufnahmen 56 eingelegt werden. In einem anderen Ausführungsbeispiel können auch U-Profile, bspw. aus Aluminium, zur Verbindung der Trittmattenmodule verwendet werden.

Im Ausführungsbeispiel gemäß Fig.2 sind ferner weitere Aussparungen in den Seitenflächen 52 angeordnet, wobei in mindestens einer dieser Aussparungen 58 ein Steckverbinder 60 zum elektrischen Kontaktieren eines benachbarten Trittmattenmoduls 42 angeordnet ist. In einer weiteren Aussparung 58 kann ein zum Steckverbinder 60 passender Stecker (hier nicht dargestellt) angeordnet sein. Eine Auswerteeinheit des Trittmattenmoduls 42 ist (ebenfalls hier nicht sichtbar) innerhalb des Trägerkörpers 48 angeordnet. Über die Stecker und Steckverbinder 60 kann die Auswerteeinheit mit einem Sicherheitssystem oder aber mit einer weiteren Auswerteeinheit eines benachbarten Trittmattenmoduls 42 verbunden sein. In einem Ausführungsbeispiel benötigt jede Schaltmatte einen Abschlussstecker. Vorzugsweise kann der Steckverbinder 60 in verschiedenen Aussparungen 58 angeordnet sein, wobei vorzugsweise in allen Eckbereichen des Trittmattenmoduls 42 Aussparungen 58 vorgesehen sind. Auf diese Weise kann die Trittmatte besonders leicht und flexibel zu einem Verbund zusammengesetzt werden.

Die ebene Oberfläche 50 ist in diesem Ausführungsbeispiel vollständig von einer elastischen Gummimatte 62 bedeckt, bspw. eine Matte aus Polyurethan, sodass der darunterliegende Sensor verdeckt ist. Vorzugsweise ist die Gummimatte 62 an der ebenen Oberfläche 50 und den Übergängen zu den Seitenflächen 52 so fixiert, dass Wasser, Staub und andere Verunreinigungen nicht ins Innere des Trägerkörpers 48 eindringen können. Besonders bevorzugt sind die Gummimatte 62 und der Trägerkörper 48 so ausgebildet, dass das Trittmattenmodul 42 der internationalen Schutzart IP67 genügt. Gleiches gilt für die Stecker und Steckverbinder 60. Unterhalb der Gummimatte 62, die hier an ihrer Oberfläche Noppen 64 aufweist, um die Rutschgefahr zu minimieren, sind die aktive Sensorfläche sowie die Auswerteeinheit der Trittmatte angeordnet. Die druckempfindliche aktive Sensorfläche erstreckt sich unterhalb der Gummimatte 62 über die gesamte ebene Oberfläche 50 der Basis des Trägerkörpers 48 und beschreibt den Wirkbereich des Trittmattenmoduls 42. In einem Ausführungsbeispiel erstreckt sich der Wirkbereich über die gesamte ebene Oberfläche 50 des Trägerkörpers 48. Es versteht sich, dass ein einzelnes Trittmattenmodul 42 als eigenständige Trittmatte verwendet werden kann, ohne dass es in einem Verbund verlegt werden muss.

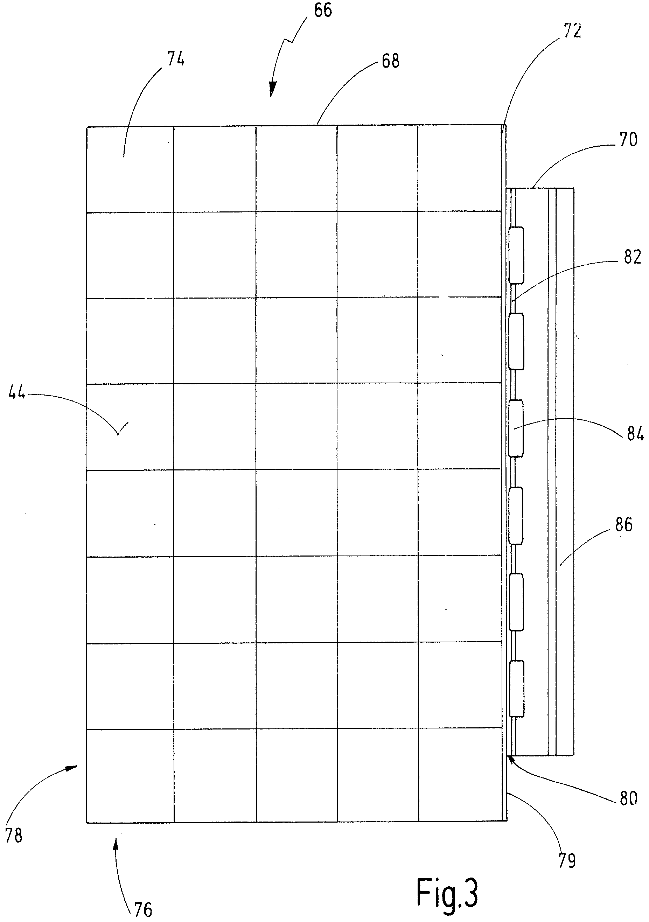

Fig. 3 zeigt ein bevorzugtes Ausführungsbeispiel eines Sensors 66 für ein Trittmattenmodul 42. Der Sensor 66 weist neben einer matrixartigen Sensoranordnung 68, welche die aktive Sensorfläche 44 bildet, einen Anschlussbereich 70 auf, über den die Sensoranordnung 68 mit einer Auswerteeinheit verbindbar ist. Die Sensoranordnung 68 und der Anschlussbereich 70 des Sensors 66 sind aus einem gemeinsamen Trägermaterial 72 gefertigt. Das Trägermaterial 72 ist vorzugsweise ein flexibles, textilartiges Gewebe, in das elektrische Strukturen eingewoben sind. Die elektrischen Strukturen in dem Gewebe entstehen durch die Verwendung von leitfähigem und nicht leitfähigem Garn. Das Trägermaterial 72 ist so flexibel, dass es sich wie eine Stoffbahn einrollen und falten lässt. Neben dem Trägermaterial 72 weist die Sensoranordnung 68 ein weiteres stoffartiges Material auf, das im Wesentlichen die druckempfindlichen Eigenschaften der Sensoranordnung 68 bestimmt.

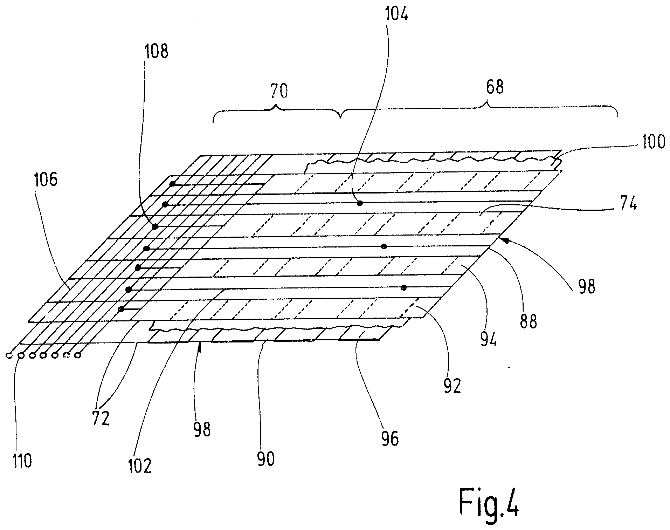

Die Sensoranordnung 68 ist aus dem Trägermaterial 72, den elektrischen Strukturen auf dem Trägermaterial 72 und dem druckempfindlichen Material gebildet. Die elektrischen Strukturen bilden einzelne Sensorzellen 74, die matrixartig in Reihen 76 und Spalten 78 angeordnet sind. Die mechanische Belastung kann für jede Sensorzelle 74 bestimmt werden, um insgesamt eine Druckverteilung über die Sensoranordnung 68 und damit insgesamt über die aktive Sensorfläche 44 zu bestimmen, wie anhand von Fig. 4 noch näher erläutert wird.

Der Anschlussbereich 70 ist in diesem Ausführungsbeispiel an einer Seitenkante 79 der Sensoranordnung 68 ausgebildet. In anderen Ausführungsbeispielen kann der Anschlussbereich 70 auch an mehreren Seitenkanten der Sensoranordnung 68 ausgebildet sein. Der Anschlussbereich 70 ist eine Verlängerung des Trägermaterials 72 und der elektrischen Strukturen darauf. Mit anderen Worten sind die Sensoranordnungen 68 und der Anschlussbereich 70 im Wesentlichen aus einem Stück gefertigt. Der Anschlussbereich 70 ist ebenfalls flexibel ausgebildet. An einer Knickkante 80, die entlang der Seitenkante 79 der Sensoranordnung 68 am Übergang zum Anschlussbereich 70 verläuft, ist der Anschlussbereich 70 faltbar. Der Anschlussbereich 70 ist dazu ausgebildet, an der Knickkante 80 umgelegt zu werden, d.h. an der Knickkante 80 kann der Anschlussbereich 70 unter die Sensoranordnung 68 gefaltet werden. In der Fig. 3 ist der Sensor nicht gefaltet dargestellt.

Der Anschlussbereich 70 kann sich über die gesamte Länge einer Seitenkante 79 der Sensoranordnung 68 erstrecken oder, wie im Ausführungsbeispiel gemäß Fig. 3, nur über einen Teilbereich der Seitenkante 79. In einem von der Seitenkante 79 ausgehenden Umlegebereich 82 weist der Anschlussbereich 70 Aussparungen 84 auf. Der Umlegebereich 82 erstreckt sich von der Knickkante 80 über dessen gesamte Länge vorzugsweise 1 bis 2 cm in den Anschlussbereich 70 hinein. Die Aussparungen 84 sind Durchgangsöffnungen im Anschlussbereich 70 und auf einer Geraden parallel zur Knickkante 80 angeordnet. Vorzugsweise sind die Aussparungen 84 rechteckige, schlitzartige Ausnahmen im Trägermaterial 72, die im Umlegebereich 82 angeordnet sind.

Der Anschlussbereich 70 weist ferner einen Kontaktierungsbereich 86 auf. Im Kontaktierungsbereich 86 können die elektrischen Strukturen kontaktiert werden, um eine elektrische Verbindung zu einer Auswerteeinheit herstellen zu können. Vorzugsweise sind im Kontaktierungsbereich 86 isolierte Kabel in das Trägermaterial 72 eingewoben, wobei an den Stellen, an denen eine Kontaktierung mit den elektrischen Strukturen erfolgen soll, die Isolierung der Kabel entfernt worden ist. Dies kann beispielsweise über nachträgliches, punktgenaues Ablasern der Isolierungen der Kabel erfolgen. Die Sensoranordnung 68 sowie deren elektrische Kontaktierung sind in der Fig. 4 näher erläutert.

Fig. 4 zeigt in einer schematischen Darstellung ein Ausführungsbeispiel einer Sensoranordnung 68 sowie dessen elektrische Kontaktierung in einem Anschlussbereich 70. Die Sensoranordnung 68 weist eine erste Schicht 88 und eine zweite Schicht 90 auf, die je aus dem Trägermaterial 72 gefertigt sind. Auf der ersten Schicht 88 und der zweiten Schicht 90 sind elektrische Strukturen, wie zuvor beschrieben, angeordnet. Die elektrischen Strukturen der ersten und zweiten Schicht 88, 90 sind aus streifenartigen Elektroden 92, 94, 96 gebildet. Die Elektroden der jeweiligen Schicht sind parallel zueinander angeordnet und durch isolierende Zwischenbereiche 98 voneinander beabstandet. Vorzugsweise sind die erste Schicht 88 und die zweite Schicht 90 aus einem Stück gefertigt, das nach der Fertigung in zwei Teile geteilt worden ist, wobei die beiden Teile um 90° verdreht zueinander übereinandergelegt worden sind, um die matrixartige Sensoranordnung 68 zu bilden.

Zwischen der ersten Schicht 88 und der zweiten Schicht 90 ist eine weitere Schicht 100 aus druckempfindlichem Material angeordnet. Vorzugsweise ist die weitere Schicht 100 aus nicht gewobenem, leitfähigem Stoff. Besonders bevorzugt ist die weitere Schicht 100 ein nicht gewobenes Mikrofasertuch, welches mit einer leitfähigen Beschichtung überzogen ist. Das druckempfindliche Material der weiteren Schicht 100 ist so ausgebildet, dass es bei mechanischer Belastung die elektrischen Eigenschaften zwischen zwei sich gegenüberliegenden Elektroden verändert.

Die Sensorzellen 74 der Sensoranordnung 68 sind in den Überlappungsbereichen (hier gestrichelt dargestellt) der Elektroden 92, 94 der ersten Schicht 88 und den Elektroden 96 der zweiten Schicht 90 ausgebildet. Es versteht sich, dass die weiteren Elektroden der ersten und zweiten Schicht weitere Sensorzellen 74 ausbilden. Jede Sensorzelle 74 ist somit über eine Elektrode der ersten Schicht 88 und eine Elektrode der zweiten Schicht 90 kontaktierbar. Zwischen den Elektroden einer Sensorzelle 74 ist das druckempfindliche Material der weiteren Schicht 100 angeordnet, welches die elektrischen Eigenschaften der Sensorzelle 74 bei einer mechanischen Belastung bestimmt. Die elektrische Eigenschaft einer Sensorzelle 74 bestimmt sich vorzugsweise über den spezifischen elektrischen Widerstand der Sensorzelle 74, der über die Elektroden der Sensorzelle 74 gemessen werden kann. Eine Änderung des spezifischen elektrischen Widerstands aufgrund einer mechanischen Belastung der Sensorzelle 74 kann sich auf vielfältige Weise ergeben. So ändert sich in einem Ausführungsbeispiel bei mechanischer Belastung der weiteren Schicht deren spezifischer elektrischer Widerstand im Ort der Belastung. In einem anderen bevorzugten Ausführungsbeispiel ergibt sich die Widerstandsänderung unter Krafteinwirkung aufgrund einer Änderung der Kontaktfläche von den Elektroden der ersten und zweiten Schicht 88, 90 zum leitfähigen Material der weiteren Schicht 100. Bspw. passen sich die erste und zweite Schicht mit den Elektroden 92, 94, 96 bei Belastung dem rauen, leitfähigen Material der weiteren Schicht 100 an, wodurch die Kontaktfläche größer wird und der Widerstand kleiner. Alternativ kann sich eine Widerstandsänderung auch aus einer durch mechanische Belastung resultierender Geometrieänderung des leitfähigen Materials der weiteren Schicht 100 ergeben.

In einem weiteren Ausführungsbeispiel ist das druckempfindliche Material ein elektrisch nicht-leitfähiges flexibles Material, das siebförmig ausgebildet ist und sich unter mechanischer Belastung verformt, sodass sich die erste und zweite Elektrode der ersten Schicht mit der dritten Elektrode in der zweiten Schicht im Bereich der mechanischen Belastung partiell berühren können. Der elektrische Widerstand einer Sensorzelle ist dann abhängig von der Elastizität, der Größe und Form des siebförmigen Gitters. Der elektrische Widerstand einer Sensorzelle bestimmt sich dann aus der Anzahl der Berührungen der durch das druckempfindliche Material beabstandeten Elektroden. Je mehr Berührungspunkte durch das mechanische Belasten des druckempfindlichen Materials im Bereich einer Sensorzelle entstehen, desto geringer ist der elektrische Widerstand der Sensorzelle.

Die Kontaktierung der Elektroden 92, 94 der ersten Schicht 88 und der Elektroden 96 der zweiten Schicht 90 erfolgt vorzugsweise an einer Seite der Sensoranordnung 68. Wie zuvor beschrieben, erfolgt die Kontaktierung in einem Anschlussbereich 70, der aus einer Verlängerung des Trägermaterials 72 der ersten und/oder der zweiten Schicht gebildet ist. Im Ausführungsbeispiel gemäß Fig. 4 sind sowohl das Trägermaterial 72 der ersten Schicht 88 als auch der zweiten Schicht 90 in den Anschlussbereich 70 verlängert. Allerdings sind hier nur die Elektroden der ersten Schicht 88 in den Anschlussbereich 70 verlängert sowie weitere Leiterbahnen 102, die in den Zwischenbereichen 98 der ersten Schicht 88 parallel zu den Elektroden angeordnet sind. Die Leiterbahnen 102 sind wie die Elektroden 92, 94 in das Trägermaterial 72 eingewoben. Die Leiterbahnen 102 können sich wie die Elektroden 92, 94 über die ganze Breite der ersten Schicht 88 erstrecken. Ferner weist die Sensoranordnung 68 Durchkontaktierungen 104 auf, die die weiteren Leiterbahnen 102 mit den Elektroden 96 der zweiten Schicht 90 elektrisch verbinden. Die Durchkontaktierungen 104 sind wie die Elektroden aus leitfähigem Garn, jedoch orthogonal zu der ersten und zweiten Schicht von der ersten Schicht 88 durch die weitere Schicht 100 in die zweite Schicht 90 geführt.

Im Anschlussbereich 70 sind isolierte Kabel 106 angeordnet, die senkrecht zu den Elektroden 92, 94 der ersten Schicht 88 sowie den weiteren Leiterbahnen 102 verlaufen. In einzelnen Kontaktpunkten 108 ist die Isolierung der Kabel 106 entfernt, sodass an diesen Stellen eine elektrische Verbindung zwischen den Elektroden 92, 94 der ersten Schicht oder einer der weiteren Leiterbahnen 102 mit den isolierten Kabeln 106 erfolgen kann. Die isolierten Kabel 106 sind an einer Seite des Anschlussbereichs 70 aus dem Trägermaterial 72 herausgeführt und mit Anschlüssen 110, beispielsweise in Form einer Steckerleiste, versehen. Über die Anschlüsse 110 können die isolierten Kabel 106 und somit die Elektroden 92, 94, 96 der ersten und zweiten Schicht 88, 90 mit einer (hier nicht dargestellten) Auswerteeinheit, die die Widerstände innerhalb der Sensorzellen 74 bestimmen kann, verbunden werden.

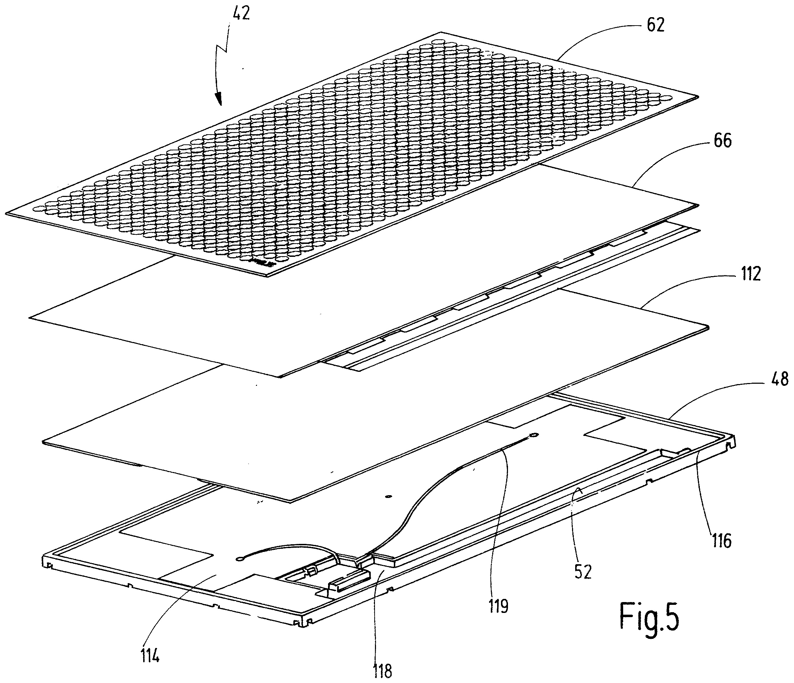

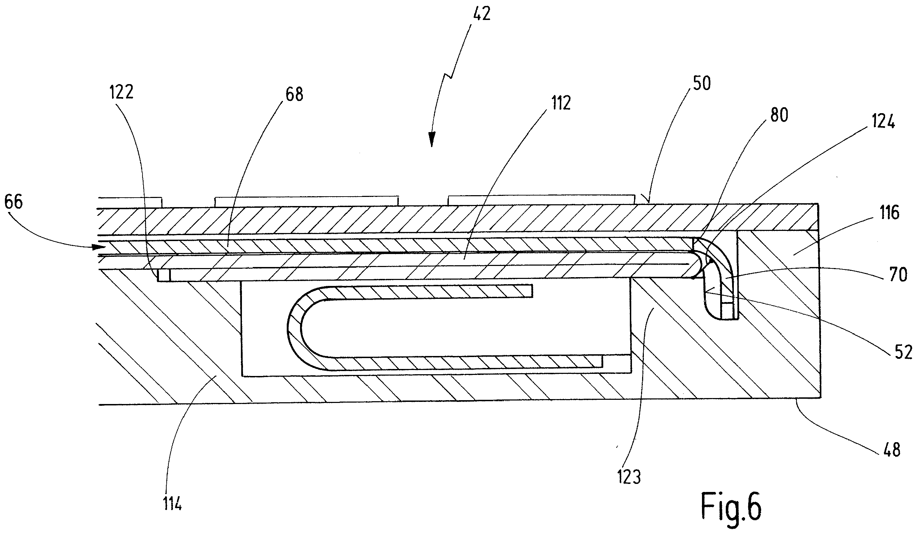

Die Fig. 5 und 6 zeigen in einer Explosionsdarstellung sowie einer Schnittzeichnung den Zusammenbau eines bevorzugten Ausführungsbeispiels eines Trittmattenmoduls 42. Gleiche Bezugszeichen bezeichnen auch hier wieder gleiche Teile.

Fig. 5 zeigt die schichtartige Zusammensetzung des Trittmattenmoduls 42. Die erste Ebene bildet die rutschfeste Gummimatte 62, unterhalb derer der Sensor 66 angeordnet ist. Dieser wiederum liegt auf einer Abdeckplatte 112 auf, die so ausgebildet ist, dass sie in den Trägerkörper 48 eingelegt werden kann. Die Abdeckplatte 112 ist so dimensioniert, dass sie von der Sensoranordnung 68 des Sensors 66 vollständig bedeckt wird, während der Anschlussbereich 70 des Sensors 66 über die Abdeckplatte 112 hinausgeht. Ebenso geht der Anschlussbereich 70 über die Gummimatte 62 hinaus. Im zusammengesetzten Zustand bilden somit die Gummimatte 62, die Abdeckplatte 112 und die Sensoranordnung 68 einen Schichtenverbund, aus dem der Anschlussbereich 70 hervorsteht.

In diesem bevorzugten Ausführungsbeispiel weist der Trägerkörper 48 eine Basis 114 mit einem umlaufenden, vorstehenden Rand 116 auf. Die Abdeckplatte 112 und die Sensoranordnung 68 liegen auf dem Trägerkörper auf. Die Fixierung der Abdeckplatte 112 auf dem Trägerkörper 48 erfolgt kraftschlüssig bzw. stoffschlüssig über mehrere Klebestellen, deren Durchmesser und Tiefe als Bohrung in dem Trägerkörper so gewählt sind, dass einerseits unterschiedliche Wärmedehnungen ausgeglichen werden und andererseits die Zugkräfte der Klebeschicht bei Temperaturänderung nicht zu einem Verzug der Trittmatte führen. In einem anderen Ausführungsbeispiel kann die Abdeckplatte 112 auch durch einen Formschluss mit dem Rand 116 fixiert sein. Ferner kann die Abdeckplatte 112 einen oder mehrere Einpressbolzen und der Trägerkörper 48 entsprechende Bohrungen aufweisen, um die Abdeckplatte 112 in Bezug zum Trägerkörper 48 zu orientieren.

Die Gummimatte 62 geht über die Abdeckplatte 112 und die Sensoranordnung 68 soweit hinaus, dass durch die Gummimatte 62 auch die Oberseite des Rands 116 bedeckt ist. Die Abdeckplatte 112 und die Sensoranordnung 68 sind auf diese Weise innerhalb des Trägerkörpers 48, vorzugsweise wasser- und staubdicht, verschlossen, indem die Gummimatte 62 auf der Oberseite des Rands 116 verklebt ist. In die Basis 114 sind Strukturen 118 in Form von Ausnahmen eingearbeitet, in denen die Elektronik des Trittmattenmoduls 42, beispielsweise die Auswerteeinheit, angeordnet sein können. Die Strukturen 118 können weiterhin Aussparungen für Kabelstränge 119 aufweisen, um die Elektronik nach außen hin zu verbinden.

Fig. 6 zeigt einen Schnitt durch ein Trittmattenmodul 42 quer zu einer Knickkante 80 des Sensors 66. Die Sensoranordnung 68 liegt auf einer Abdeckplatte 112 auf, die wiederum auf dem Trägerkörper 48 aufliegt. Die Abdeckplatte 112 kann eine starres Blech sein, welches in diesem Ausführungsbeispiel an einem Seitenrand um 180° gefaltet ist, wobei der gefaltet Abschnitt in eine Falz im Trägerkörper 48 formschlüssig eingreift, um das Blech auf dem Trägerkörper zu fixieren. Der Anschlussbereich 70 ist um eine zur Oberfläche 50 senkrecht stehende Seitenfläche 52 in einem Umlenkradius 124 umgelegt. Der Umlenkradius 124 beträgt vorzugsweise zwischen 0,2 cm und 1 cm. Beim Umlegen wird ein Vorsprung 123 des Trägerkörpers 48 durch die Aussparung 84 im Anschlussbereich geführt, auf dem die Abdeckplatte 112 aufliegt. Eine Kraft, die senkrecht auf die Oberfläche 50 einwirkt, wirkt somit nicht auf den Anschlussbereich 70, sondern wird über den Vorsprung 123 am Anschlussbereich 70 vorbei auf den Trägerkörper 48 übertragen. Der Anschlussbereich 70 ist somit beim Auftreten einer Person unbelastet.

In dem bevorzugten Ausführungsbeispiel nach Fig. 6 weist der Trägerkörper 48 zusätzlich einen Rand 116 auf, der den Trägerkörper umläuft. Auf den Rand 116 ist die rutschfeste Gummimatte 62 aufgelegt, wodurch das Innere des Trägerkörpers 48 verschlossen ist. In einem anderen Ausführungsbeispiel können die Sensoranordnung 68 und die Abdeckplatte 112 auch bis über den Rand geführt werden, sodass der Anschlussbereich 70 um den Rand 116 umgelegt und ins Innere des Trägerkörpers 48 geführt ist. Der Rand 116 weist in diesem Fall ein nutenartiges Profil auf, in das die Aussparungen 84 des Anschlussbereichs 70 eingreifen können, sodass auch hier eine auf die Oberfläche 50 einwirkende Kraft um den Anschlussbereich 70 herumgeführt wird.

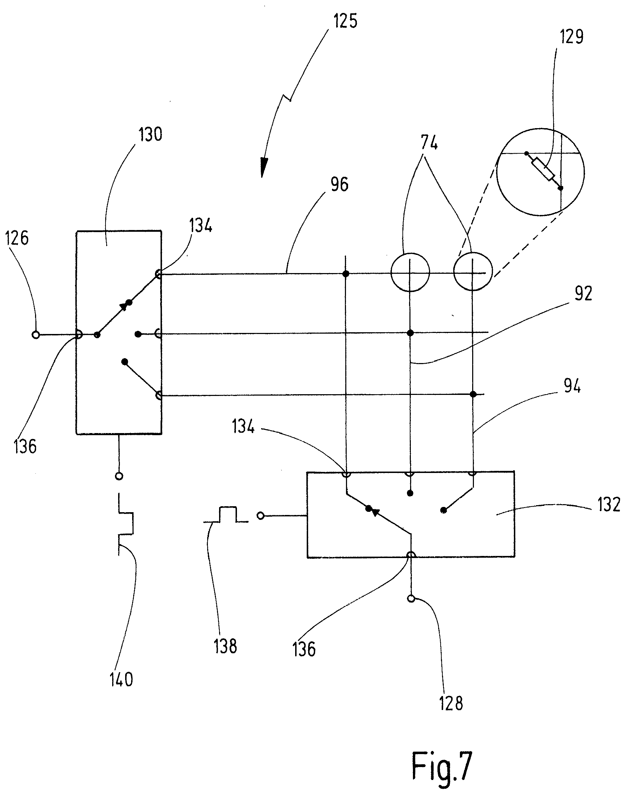

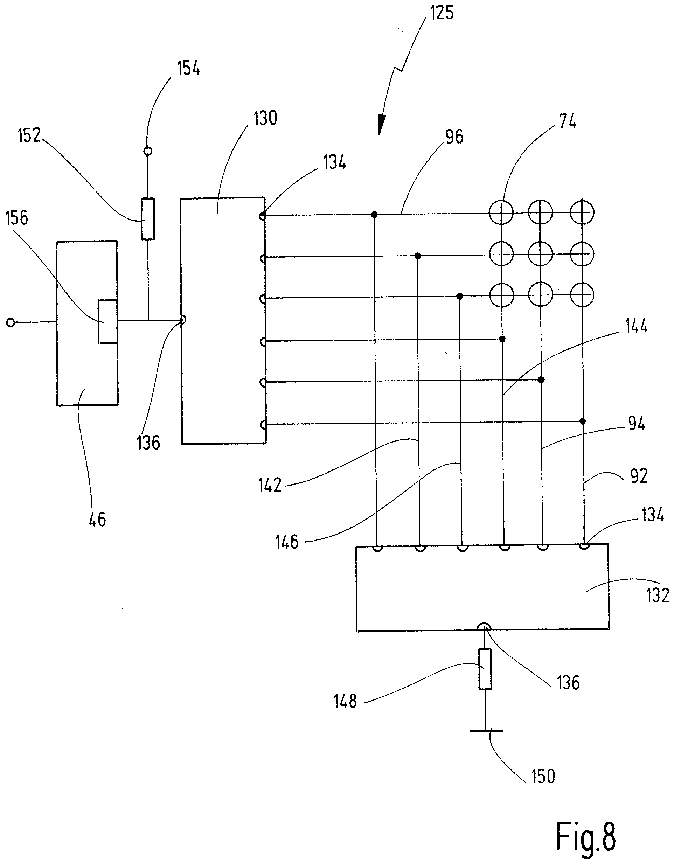

Fig. 7 und 8 zeigen zwei Ausführungsbeispiele zur Kontaktierung des Sensors 66 eines Signalgebers 10, 12 in einer schematischen Darstellung.

Fig. 7 zeigt eine erste und zweite Sensorzelle 74, die über eine Schaltungsanordnung 125 mit einem ersten Anschluss 126 und einem zweiten Anschluss 128 mit einer hier nicht näher dargestellten Auswerteeinheit verbindbar sind. Die Sensorzellen 74 sind aus einer ersten Elektrode 92, einer zweiten Elektrode 94 und einer dritten Elektrode 96 gebildet. Zwischen den Elektroden einer Sensorzelle 74 ist ein Widerstand 129 bestimmbar, der wie zuvor erläutert von der mechanischen Belastung der Sensorzelle 74 abhängig ist.

Die Elektroden 92, 94, 96 sind mit einem ersten Sequentialisierungselement 130 und einem zweiten Sequentialisierungselement 132 verbunden. Das erste und das zweite Sequentialisierungselement 130, 132 sind dazu ausgebildet, eine Vielzahl von Anschlüssen an einen Anschluss 126, 128 zusammenzuführen. Die Sequentialisierungselemente 130, 132 sind vorzugsweise als Drehschalter, sogenannte Multiplexer, ausgebildet. Ein Sequentialisierungselement 130, 132 weist eine Vielzahl von Eingängen 134 sowie einen Ausgang 136 auf. Bei einem Sequentialisierungselement 130, 132 ist zu einem bestimmten Zeitpunkt der eine Ausgang 136 immer mit einem Eingang der Eingänge 134 verbunden. Das Umschalten zwischen den einzelnen Eingängen 134 erfolgt durch einen externen Trigger 138, 140. Der externe Trigger 138, 140 kann von der Auswerteeinheit gezielt bereitgestellt werden oder durch ein Taktsignal vorgegeben sein. Im letzteren Fall ist der Takt des Triggers 138 des zweiten Sequentialisierungselements 132 um einen Faktor größer als der Takt des Triggers 140 des ersten Sequentialisierungselements 130. Das Verhältnis ist so gewählt, dass das erste Sequentialisierungselement 130 einen ersten Eingang der Eingänge 134 mit dem Ausgang 136 verbindet, während das zweite Sequentialisierungselement in derselben Zeit alle Eingänge 134 einmal an den Ausgang 136 schaltet. So können auf einfache Weise nacheinander alle Sensorzellen 74 abgefragt werden, indem die jeweiligen Elektroden durch das erste und das zweite Sequentialisierungselement 130, 132 mit deren Ausgängen 136 verbunden werden.

Das erste und das zweite Sequentialisierungselement 130, 132 sind an ihren Eingängen 134 überbelegt, d.h. das erste Sequentialisierungselement 130 ist nicht nur mit den Elektroden 92, 94 der ersten Schicht 88, sondern auch mit den Elektroden 96 der zweiten Schicht 90 verbunden. Das zweite Sequentialisierungselement 132 ist nicht nur mit den Elektroden 96 der zweiten Schicht 90, sondern auch mit den Elektroden 92, 94 der ersten Schicht 90 verbunden. Wie in Fig. 7 dargestellt, können die Ausgänge 136 mit derselben Elektrode (hier die dritte Elektrode 96) verbunden sein. Mit anderen Worten werden bei einer derartigen Schalterstellung des ersten und zweiten Sequentialisierungselements 130, 132 die Sensorzellen 74 "überbrückt". Es besteht somit eine direkte Verbindung zwischen den Ausgängen 136 des ersten Sequentialisierungselements 130 und des zweiten Sequentialisierungselements 132.

Dieser "Kurzschluss" kann messtechnisch von einer an den ersten und zweiten Anschlüssen 126, 128 angeschlossenen Auswerteeinheit bestimmt werden. Schalten das erste und das zweite Sequentialisierungselement 130, 132 ordnungsgemäß, kann die Auswerteeinheit den entsprechenden Kurzschluss zwischen dem ersten Anschluss 126 und dem zweiten Anschluss 128 bestimmen. Für einen Selbsttest der Sequentialisierungselemente 130, 132 werden diese in Intervallen kurzgeschlossen und der Kurzschluss von der Auswerteeinheit abgefragt. Auf diese Weise können die Sequentialisierungselemente 130, 132 als Teil der Signalverarbeitungskette des Signalgebers kontinuierlich auf ihre Funktionsfähigkeit hin überprüft werden.

Fig. 8 zeigt ein besonders bevorzugtes Ausführungsbeispiel zur Kontaktierung eines matrixartigen Sensors 66. In dem Ausführungsbeispiel gemäß Fig. 8 sind neun Sensorzellen 74 über ein erstes Sequentialisierungselement 130 und ein zweites Sequentialisierungselement 132 mit einer Auswerteeinheit 46 verbunden. Die Schaltungsanordnung 125 weist neben der ersten, zweiten und dritten Elektrode 92, 94, 96 drei weitere Elektroden 142, 144, 146 auf, die die weiteren Sensorzellen 74 kontaktieren. Wie im Ausführungsbeispiel zuvor sind alle Elektroden 92, 94, 96, 142, 144, 146 je mit den Eingängen 134 des ersten Sequentialisierungselements 130 und des zweiten Sequentialisierungselements 132 verbunden. So können nicht nur jeweils die zwei Elektroden einer Sensorzelle 74 mit den Ausgängen 136 verbunden werden, sondern auch direkte Verbindungen in zuvor erwähnter Weise erzeugt werden.

Im Ausführungsbeispiel gemäß Fig. 8 ist der Ausgang 136 des zweiten Sequentialisierungselements 132 über einen ersten Widerstand 148 mit einem elektrischen Masseanschluss 150 verbunden. Der Ausgang 136 des ersten Sequentialisierungselements 130 ist einerseits über einen zweiten Widerstand 152 mit einer Spannungsquelle 154 verbunden und andererseits ist der Ausgang 136 des ersten Sequentialisierungselements 130 mit einem Analog-Digital-Wandler (ADC) 156 der Auswerteeinheit 46 verbunden. Somit entsteht ein Spannungsteiler zwischen dem zweiten Widerstand 152 und dem ersten Widerstand 148 bzw. ein Spannungsteiler zwischen dem zweiten Widerstand 152 und der Summe aus dem zweiten Widerstand 152 und dem Widerstand 129der Sensorzelle 74, auf die das erste und das zweite Sequentialisierungselement 130, 132 geschaltet sind. Mit anderen Worten, wenn das erste Sequentialisierungselement 130 und das zweite Sequentialisierungselement 132 "kurzgeschlossen" sind, stellt sich am Analog-Digital-Konverter 156 eine definierte Spannung ein, die sich aus dem Spannungsteiler des ersten und zweiten Widerstands 148, 152 und der Spannung der Spannungsquelle 154 ergibt. Andererseits lässt sich der spezifische Widerstand 129einer Sensorzelle 74 einfach durch die Abweichung von diesem Erwartungswert bestimmen.

Auf diese Weise ist es besonders einfach möglich, mittels der Auswerteeinheit 46 den aktuellen Widerstand einer Sensorzelle 74 und damit die entsprechende Druckbelastung einer Sensorzelle 74 zu bestimmen. Ferner können die Sequentialisierungselemente 130, 132 auf einfache Weise hinsichtlich ihrer Adressierung überprüft werden. Zusätzliche Einrichtungen zur Überwachung der Sequentialisierungselemente 130, 132 sind nicht notwendig.

Darüber hinaus kann auch der Analog-Digital-Wandler 156 auf seinen ordnungsgemäßen Betrieb hin überprüft werden, wenn der erste Widerstand 148 und der zweite Widerstand 152 jeweils variabel einstellbar sind. Durch den variablen Spannungsteiler, der vorliegt wenn das erste und das zweite Sequentialisierungselement 130, 132 auf dieselbe Elektrode geschaltet sind, kann der gesamte Bereich des Analog-Digital-Wandlers 156 überprüfbar gemacht werden. Die Auswertung der Sensorzellen 74 sowie die Überwachung der Sequentialisierungselemente und/oder des Analog-Digital-Wandlers 156 können über einen Anschluss 158 einer übergeordneten Steuereinheit zur weiteren Verarbeitung übergeben werden.

In einem Ausführungsbeispiel ist die Auswerteeinheit 46 als OSSD ausgebildet, d.h. das Ausgangssignal am Ausgang 158 ist ein OSSD-Signal, welches einen ersten Zustand und einen zweiten Zustand anzeigen kann. Vorzugsweise handelt es sich um ein redundantes Taktsignal, mit zwei Komponenten, die nicht synchron zueinander sind. Der erste Zustand zeigt einen sicheren Zustand des Signalgebers an, d. h. einen Zustand, in dem weder eine Sensorzelle 74 belastet ist noch ein Fehler bei den Sequentialisierungselementen 130, 132 oder dem Analog-Digital-Wandler 156 erkannt worden ist. Der erste Zustand wird aktiv signalisiert, d. h. in diesem Zustand muss das redundante Signal anliegen. Der zweite Zustand wird durch das Ausbleiben des redundanten Taktsignals signalisiert und gibt an, dass entweder eine Sensorzelle 74 belastet worden ist oder ein Fehler bei den Sequentialisierungselementen 130, 132 oder des Analog-Digital-Wandlers 156 vorliegt.

In einem anderen Ausführungsbeispiel ist das Ausgangssignal der Auswerteeinheit 46 ein kodiertes Signal, welches Informationen beinhaltet, welche Sensorzelle 74 belastet bzw. unbelastet ist. Ebenso können die Ergebnisse der Selbsttests der Sequentialisierungselemente 130, 132 und des Analog-Digital-Wandlers 156 an ein Sicherheitssystem übertragen werden, so dass einerseits eine gezielte Auswertung der Berührung des Sensors 66 erfolgen kann und andererseits eine Diagnosemeldung generiert werden kann, die auf die Funktionsfähigkeit des Sensors 66 und dessen Signalverarbeitung hindeutet.

Vorstellbar sind auch Zwischenformen zwischen den letzten beiden Ausführungsbeispielen, beispielsweise indem von der Auswerteeinheit ein OSSD-Signal bereitgestellt wird und gleichzeitig über einen zweiten Ausgang die Diagnosedaten bereitgestellt werden. Es versteht sich, dass das Ausführungsbeispiel gemäß Fig. 8 auf eine beliebige Zahl von Sensorzellen 74 ausgedehnt werden kann und die Erfindung nicht auf die gezeigten neun Sensorzellen beschränkt ist.

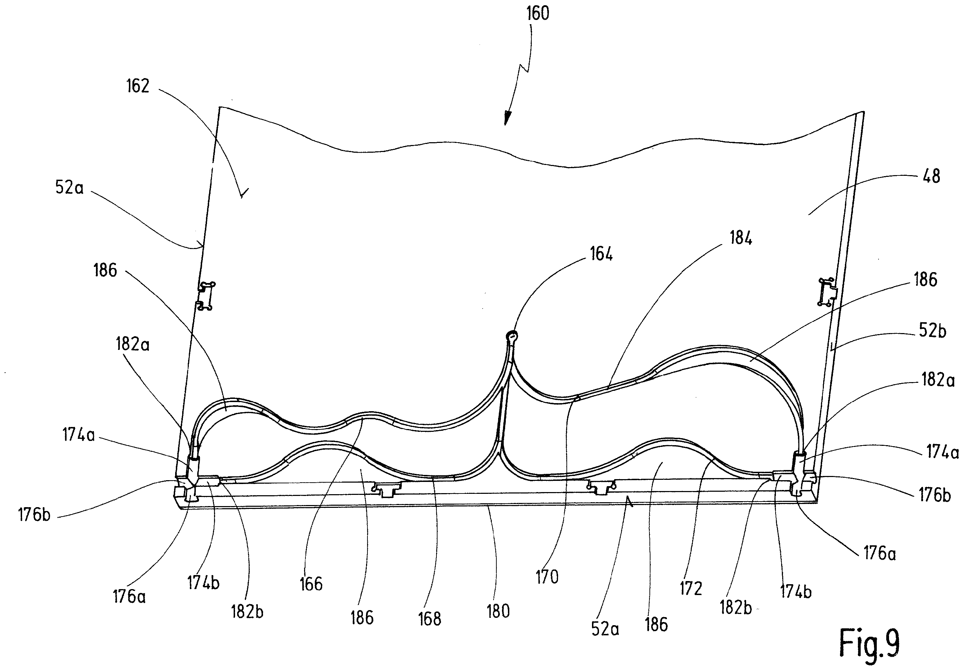

Fig. 9 zeigt ein bevorzugtes Ausführungsbeispiel einer Unterseite einer neuen Trittmatte in einer perspektivischen Darstellung. Die Unterseite 160 der Trittmatte entspricht der Unterseite des Trägerkörpers 48. Im Wesentlichen weist die Unterseite 160 eine ebene Oberfläche 162 auf, in die Strukturen eingearbeitet sind, um eine Kontaktierung der im Trägerkörper 48 innenliegenden Elektronik zu ermöglichen. Die Strukturen werden beispielsweise durch einen Oberflächenfräsvorgang in die ebene Oberfläche 162 eingearbeitet oder unmittelbar beim Herstellen des Trägerkörpers 48, bspw. beim Spritzgießen, gebildet.

Im Ausführungsbeispiel gemäß Fig. 9 weisen die Strukturen eine Durchgangsöffnung 164, eine erste, zweite, dritte und vierte Kabelführung 166, 168, 170, 172 sowie Fassungen 174a, 174b in Form von Senken in der Unterseite 160 auf. Die Durchgangsöffnung 164 ist eine zur ebenen Oberfläche 162 senkrechte Öffnung, vorzugsweise in Form einer Bohrung, die sich durch den Trägerkörper 48 erstreckt. Durch die Durchgangsöffnung 164 kann eine Verbindung zu einer innerhalb des Trägerkörpers 48 liegenden Elektronik, wie beispielsweise die Auswerteeinheit der Trittmatte, hergestellt werden. In einem bevorzugten Ausführungsbeispiel ist durch die Durchgangsöffnung 164 ein hier nicht dargestelltes Kabel geführt. Das Kabel ist vorzugweise ein mehradriges Kabel mit einer schützenden Ummantelung. Alternativ ist auch die Verwendung eines vorkonfektionierten Kabelbaums denkbar.

Das Kabel ist vorzugsweise in der Durchgangsöffnung 164 fixiert und die Durchgangsöffnung 164 im Übrigen durch eine Dichtung oder Füllung staub- und wasserdicht versiegelt, sodass eine hohe Schutzart, beispielsweise IP67, gewährleistet werden kann. Durch die Fixierung weist der Teil des Kabels, der aus der Durchgangsöffnung 164 aus dem Trägerkörper 48 heraustritt, eine definierte, feste Länge auf, an dessen Ende ein Steckverbinder angeordnet ist. Der Steckverbinder ist vorzugweise ein mehrpoliger Rundsteckverbinder in M5, M8 oder M12. In einem bevorzugten Ausführungsbeispiel weist der Steckverbinder eine Schraubverriegelung nach DIN EN 61076-2-104 oder Schnappverriegelung auf. Der Steckverbinder kann eine Schutzart IP65/IP67 aufweisen, bspw. indem der Steckverbinder am Kabel umspritzt ist. Besonders bevorzugt ist der Steckverbinder in einem 360° EMV-sicher geschirmt Metallgehäuse angeordnet, um eine hohe Zuverlässigkeit eine Signalübertragung zu gewährleisten.

Die Fassungen 174a, 174b bilden Aufnahmen für die Steckverbinder. Die Form einer Fassung 174a, 174b ist der Form eines Steckverbinders angepasst. Vorzugsweise ist eine Fassung 174a, 174b eine längliche Senke mit einem halbrunden Querschnitt, in die ein Rundsteckverbinder einclipsbar ist, sodass der Steckverbinder in der Senke gehalten wird. Die Fassungen 174a, 174b münden auf einer Seite in einer Aussparung 176a, 176b in den Seitenflächen 52a, 52b und gehen auf der gegenüberliegenden Seite in eine der Kabelführungen 166, 168, 170, 172 über. Besonders bevorzugt sind jeweils zwei Fassungen 174a, 174b kreuzförmig zueinander in einem Eckbereich, in dem die erste und zweite Seitenflächen 52a, 52b aneinander treffen, angeordnet. Vorzugweise sind die Abstände, in denen die Aussparungen 176a, 176b der beiden Fassungen 174a, 174b von der Stoßkante 178 der beiden Seitenflächen 52a, 52b entfernt sind, gleich groß, sodass sich die Aussparungen 176a, 176b zweier benachbarter Trittmatten gegenüberliegen, wenn die Trittmatten bündig aneinander stoßen. In einem bevorzugten Ausführungsbeispiel mit einem quaderförmigen Trägerkörper sind in allen vier Ecken sich überschneidende Fassungen angeordnet mit Aussparungen jeweils in einem festen Abstand zu den Seitenkanten des quaderförmigen Trägerkörper. Damit lassen sich die Trittmatten besonders flexibel miteinander kombinieren und zu einem Verbund zusammenfügen.

Die Fassungen 174a, 174b sind über Kabelführungen 166, 168, 170, 172 mit der Durchgangsöffnung 164 verbunden. Im Ausführungsbeispiel nach Fig. 9 ist die Durchgangsöffnung 164 bezogen auf eine Stirnseite 180 der Trittmatte mittig angeordnet. Zwei Fassungen 174a sind hier mit einer ersten Orientierung angeordnet, in der die Aussparungen 176a der Fassungen 174a in den Seitenflächen 52a liegen, wobei zwei weitere Fassungen 174b in einer zweiten Orientierung angeordnet sind, sodass deren Aussparungen 176b in den Seitenflächen 52b liegen. Vorzugsweise stehen die erste und zweite Orientierung in einem 90° Winkel zueinander, wenn der Trägerkörper 48 rechtwinklig ist. Die Übergänge 182a, 182b von den Fassungen 174a, 174b in die Kabelführungen 166, 168, 170, 172 sind in einem ersten und einem zweiten Abstand zur Durchgangsöffnung 164 angeordnet, wobei der erste Abstand und der zweite Abstand unterschiedlich groß sind. An den Übergängen 182a, 182b ist eine Kante ausgebildet, sodass ein in die Fassungen 174a, 174b eingelegter Steckverbinder nicht in die Kabelführungen gleiten kann.

In die Kabelführungen 166, 168, 170, 172 ist ein aus der Durchgangsöffnung 164 austretendes Kabel einlegebar. Die Kabelführungen 166, 168, 170, 172 bilden Kanäle in der ebenen Oberfläche 162, die von der Durchgangsöffnung 164 bis zu den Übergängen 182a, 182b verlaufen. Die Kanalwände sind abgerundet, wobei die Rundung so ausgebildet ist, dass eine Oberfläche des Kabels zumindest teilweise bündig an den Kanalwänden anliegt. Die Tiefe der Kanäle ist so ausgebildet, dass ein Kabel in den Kanälen vollständig hineingelegt werden kann und somit nicht aus der ebenen Oberfläche 162 hervorsteht. Vorzugsweise weisen die Kanäle im Querschnitt ein tonnenförmiges Profil auf. In einem anderen Ausführungsbeispiel ist das Profil U-förmig, wobei die unteren Ecken abgerundet sind.

Die Kanäle weisen in einem Ausführungsbeispiel eine Länge auf, die der definierten Länge des aus der Durchgangsöffnung 164 austretenden Kabels entspricht. Die Kanäle der einzelnen Kabelführungen 166, 168, 170, 172 sind vorzugsweise gleich lang. Der Verlauf der Kabelführungen 166, 168, 170, 172 ist kurvenförmig mit großen Krümmungsradien und weist keine Ecken auf. Der Verlauf ist knickfrei. Vorzugsweise sind die Radien größer als 10 cm. Im Ausführungsbeispiel gemäß Fig. 9 ist der kurvenförmige Verlauf einer Kabelführung 166, 168, 170, 172 aus verschiedenen Abschnitten zusammengesetzt. Die Abschnitte können gerade oder bogenförmige Abschnitte sein. Vorzugsweise sind zwischen den Abschnitten Übergangsbögen angeordnet, die so ausgebildet sind, dass beim Übergang von einem geraden Abschnitt in einen kreisbogenförmigen Abschnitt die Kurve nur langsam und nicht sprungartig enger wird. Der kurvenförmige Verlauf ermöglicht es, dass auch steife Kabel mit einer geringen Flexibilität gleichmäßig in die Kabelführungen eingelegt und somit sicher verstaut werden können. Insbesondere wird die Gefahr, dass beim Knicken der Kabel eine Ader bricht oder mehrere Adern bis zu einem Querschluss zusammengequetscht werden, verringert.

In einem Ausführungsbeispiel ist das Kabel ohne Spiel in den Kabelführungen 166, 168, 170, 172 verlegt. In einem anderen bevorzugten Ausführungsbeispiel weisen die Kanäle mindestens einen ersten Abschnitt 184 und einen zweiten Abschnitt 186 auf. Im ersten Abschnitt 184 ist ein Kabel ohne Spiel verlegbar. Im zweiten Abschnitt 186 wird ein Stauchraum gebildet, indem sich die Kabelführung in diesem Bereich weitet. Vorzugsweise nimmt die definierte Breite der Kabelführungen in einem ersten Bereich des zweiten Abschnitts 186 gleichmäßig zu und in einem anschließenden zweiten Bereich kontinuierlich wieder ab bis hin zu der definierten Breite des ersten Abschnitts 184. Der Stauchraum 186 ist dazu ausgebildet, ein Kabel spielfrei zu verlegen, um geringfügige Variationen in der Kabellänge auszugleichen. Die Kombination von Abschnitten mit Stauchräumen 186 und Abschnitten 184 mit passgenauer Kabelführung ermöglichen eine gute Fixierung des Kabels in den Kanälen, wobei gleichzeitig eine gewisse Flexibilität hinsichtlich der Kabellänge durch die Stauchräume 184 gegeben ist.

Die Flexibilität bei der Kabelführung ist von Bedeutung, wenn in einem Ausführungsbeispiel die Fassungen 174a, 174b weitere Strukturen zum Fixieren der Steckverbinder in unterschiedlichen Positionen aufweisen. So ist es denkbar, dass der Steckverbinder innerhalb der Fassung 174a, 174b in einer ersten und einer zweiten Position angeordnet werden kann, wobei in der ersten Position der Steckverbinder mit der Seitenfläche 52 bündig abschließt und in der zweiten Position der Steckverbinder über die Seitenfläche 52 hinausgeht bzw. weiter im Inneren des Trägerkörper 48 zum Liegen kommt und somit nicht bündig mit den Seitenflächen abschließt. In der zweiten Position muss das Kabel zum Steckverbinder länger bzw. kürzer sein, als in der ersten Position. Diese Variation der Länge kann durch die Stauchräume 186 erreicht werden.

Es versteht sich, dass die Ausgestaltung der Unterseite nicht auf die hier gezeigten Ausführungsbeispiele beschränkt ist. Insbesondere kann in anderen Ausführungsbeispielen die Durchgangsöffnung 164 auch außermittig angeordnet sein. Ebenso können weitere Durchgangsöffnungen mit weiteren Kabelführungen sowie Durchgangsöffnungen mit mehreren Kabeln vorgesehen sein, um auch die weiteren Seitenflächen mit Anschlussmöglichkeiten zu versehen. In einem bevorzugt Ausführungsbeispiel wird über eine erste Durchgangsöffnung 164 ein Ausgangssignal der Auswerteeinheit der Trittmatte bereitgestellt und über eine weitere Durchgangsöffnung ein Eingangs- oder Steuersignal aufgenommen. Besonders bevorzugt lassen sich Signale von einer Durchgangsöffnung über die Auswerteeinheit zu einer weiteren Durchgangsöffnung durchschleifen. Damit lässt sich besonders gut ein in Serie geschalteter Verbund von Trittmatten bilden.

## Patentansprüche

1. Signalgeber (10) zur Überwachung einer technischen Anlage (14),
mit einem Sensor (66), der mindestens eine erste Sensorzelle (74) und eine zweite Sensorzelle (74) aufweist,
mit einer ersten, zweiten und dritten Elektrode (92, 94, 96) zum Kontaktieren der ersten und zweiten Sensorzelle (74), wobei die erste und zweite Elektrode (92, 94) in einer ersten Ebene (88) angeordnet sind und die dritte Elektrode (96) in einer zweiten Ebene (90) angeordnet sind,
mit einem druckempfindlichen Material innerhalb der ersten und zweiten Sensorzelle (74), welches dazu ausgebildet ist, bei lokaler Belastung eine elektrische Eigenschaft der ersten und zweiten Sensorzelle (74) im Ort der Belastung zu ändern, wobei die erste und die zweite Ebene (88, 90) durch das druckempfindliche Material (100) voneinander beabstandet sind,
und mit einer Auswerteeinheit (46), die dazu ausgebildet ist, ein Ausgangsignal in Abhängigkeit der Betätigung der ersten und zweiten Sensorzellen (74) bereitzustellen,
wobei die erste Elektrode (92) mit der ersten Sensorzelle (74) verbunden ist, die zweite Elektrode (94) mit der zweiten Sensorzelle (74) verbunden ist und die dritte Elektrode (96) sowohl mit der ersten als auch mit der zweiten Sensorzelle (74) verbunden ist,
**gekennzeichnet durch**
ein erstes und ein zweites Sequentialisierungselement (130, 132) und einen Anschluss (128, 150) zum Zuführen eines definierten ersten Potentials, wobei das erste und zweite Sequentialisierungselement überbelegt sind, indem über das erste Sequentialisierungselement (130) die erste und zweite Elektrode (92, 94) der ersten Ebene (88) und die dritte Elektrode (96) der zweiten Ebene (90) mit der Auswerteeinheit (46) verbunden sind und indem über das zweite Sequentialisierungselement (132) die erste und zweite Elektrode (92, 94) der ersten Ebene (88) und die dritte Elektrode (92, 94, 96) der zweiten Ebene (90) mit dem Anschluss (128, 150) des definierten ersten Potentials (150) verbunden sind.

2. Signalgeber nach Anspruch 1 **gekennzeichnet durch** einen Widerstand (148), der zwischen dem Anschluss (128, 150) des ersten Potentials und dem zweiten Sequentialisierungselement (132) angeordnet ist.

3. Signalgeber nach Anspruch 2 **gekennzeichnet dadurch, dass** der eine Widerstand (148) variabel ist.

4. Signalgeber nach einem der Ansprüche 2 bis 3 **gekennzeichnet durch** einen Anschluss (154) zum Zuführen eines zweiten Potentials, wobei der Anschluss des zweiten Potentials über einen Vorwiderstand (152) parallel zur Auswerteeinheit (46) mit dem ersten Sequentialisierungselement (130) verbunden ist.

5. Signalgeber nach Anspruch 4 **gekennzeichnet dadurch, dass** der Vorwiderstand (152) variabel ist.

6. Signalgeber nach einem der Ansprüche 1 bis 5, **gekennzeichnet durch** eine erste Orientierung der ersten und zweiten Elektrode (92, 94) und eine zweite Orientierung der dritten Elektrode (96) sowie einen Zwischenbereich (98), wobei der Zwischenbereich (98) die erste und zweite Elektrode (92, 94) in der ersten Ebene (88) voneinander beabstandet und elektrisch isoliert.

7. Signalgeber nach Anspruch 6 **gekennzeichnet durch** eine weitere Leiterbahn (102) und eine Durchkontaktierung (104), wobei die weitere Leiterbahn (102) in dem Zwischenbereich (98) angeordnet ist und die erste Orientierung aufweist und die Durchkontaktierung (104) die weitere Leiterbahn (102) mit der dritten Elektrode (96) elektrisch verbindet.

8. Signalgeber nach einem der Ansprüche 1 bis 7 **gekennzeichnet dadurch, dass** die erste Ebene (88) und die zweite Ebene (90) aus Gewebe mit elektrisch leitfähigem und elektrisch nicht-leitfähigem Garn gebildet sind, wobei die erste, zweite und dritte Elektrode (92, 94, 96) aus leifähigem Garn in das Gewebe eingewoben sind.

9. Signalgeber nach einem der Ansprüche 1 bis 8, **gekennzeichnet dadurch, dass** das druckempfindliche Material (100) ein elektrisch nicht-leitfähiges flexibles Material ist, das siebförmig ausgebildet ist, und sich unter mechanischer Belastung verformt, so dass sich die erste und zweite Elektrode (92, 94) der ersten Ebene (88) mit der dritten Elektrode (96) in der zweiten Ebene (90) im Bereich der mechanischen Belastung partiell berühren können.

## Claims

1. Signaling device (10) for monitoring a technical installation (14),
having a sensor (66) comprising at least a first sensor cell (74) and a second sensor cell (74),
a first, second and third electrode (92, 94, 96) for contacting said first and second sensor cells (74), said first and second electrodes (92, 94) being disposed in a first plane (88) and said third electrode (96) being disposed in a second plane (90),
a pressure sensitive material within said first and second sensor cells (74) configured to change, under local loading, an electrical characteristic of said first and second sensor cells (74) at the location of loading, said first and second planes (88, 90) being spaced apart by said pressure sensitive material (100),
and an evaluation unit (46) configured to provide an output signal in response to actuation of the first and second sensor cells (74),
wherein the first electrode (92) is connected to the first sensor cell (74), the second electrode (94) is connected to the second sensor cell (74), and the third electrode (96) is connected to both the first and second sensor cells (74),
**characterized by**
a first and a second sequentialization element (130, 132) and a terminal (128, 150) for supplying a defined first potential, wherein the first and second sequentialization elements are over-occupied in that the first and second electrodes (92, 94) of the first plane (88) and the third electrode (96) of the second plane (90) are connected to the evaluation unit (46) via the first sequentialization element (130) and in that the first and second electrodes (92, 94) of the first plane (88) and the third electrode (92, 94, 96) of the second plane (90) are connected to the terminal (128, 150) of the defined first potential (150) via the second sequentialization element (132).

2. Signaling device according to claim 1, **characterized by** a resistor (148) disposed between the terminal (128, 150) of the first potential and the second sequentialization element (132).

3. Signaling device according to claim 2, **characterized in that** said resistor (148) is variable.

4. Signaling device according to any one of claims 2 to 3, **characterized by** a terminal (154) for supplying a second potential, the terminal of the second potential being connected to the first sequentialization element (130) via a series resistor (152) parallel to the evaluation unit (46).

5. Signaling device according to claim 4, **characterized by** said series resistor (152) being variable.

6. Signaling device according to any one of the claims 1 to 5, **characterized by** a first orientation of the first and second electrodes (92, 94) and a second orientation of the third electrode (96), and by an intermediate region (98), wherein the intermediate region (98) spaces apart the first and second electrodes(92, 94) from one another in the first plane (88) and is electrically insulated.

7. Signaling device according to claim 6, **characterized by** a further conductor track (102) and a via connection (104), the further conductor track (102) being disposed in the intermediate region (98) and having the first orientation and the via connection (104) electrically connecting the further conductor track (102) to the third electrode (96).

8. Signaling device according to any one of claims 1 to 7, **characterized in that** said first plane (88) and said second plane (90) are formed of fabric having electrically conductive and electrically non-conductive yarn, wherein said first, second and third electrodes (92, 94, 96) are woven of conductive yarn into said fabric.

9. Signaling device according to any one of claims 1 to 8, **characterized in that** the pressure-sensitive material (100) is an electrically non-conductive flexible material which is sieve-shaped and deforms under mechanical load so that the first and second electrodes (92, 94) of the first plane (88) can partially contact the third electrode (96) in the second plane (90) in the region of the mechanical loading.

## Revendications

1. Générateur de signaux (10) pour la surveillance d'une installation technique (14), comportant un capteur (66) qui présente au moins une première cellule de capteur (74) et une deuxième cellule de capteur (74),
comportant des première, deuxième et troisième électrodes (92, 94, 96) pour la mise en contact avec les première et deuxième cellules de capteur (74), dans lequel les première et deuxième électrodes (92, 94) sont disposées dans un premier plan (88) et la troisième électrode (96) est disposée dans un deuxième plan (90),
comportant un matériau sensible à la pression à l'intérieur des première et deuxième cellules de capteur (74), qui est conçu, lors de l'application locale d'une charge, pour modifier une propriété électrique des première et deuxième cellules de capteur (74) à l'emplacement de l'application de charge, dans lequel les premier et deuxième plans (88, 90) sont espacés l'un de l'autre par le matériau sensible à la pression (100),
et comportant une unité d'évaluation (46) qui est conçue pour fournir un signal de sortie en réponse à un actionnement des première et deuxième cellules de capteur (74),
dans lequel la première électrode (92) est reliée à la première cellule de capteur (74), la deuxième électrode (94) est reliée à la deuxième cellule de capteur (74) et la troisième électrode (96) est reliée à la fois aux première et deuxième cellules de capteur (74), **caractérisé par**
des premier et deuxième éléments de séquençage (130, 132) et par une borne (128, 150) destinée à délivrer un premier potentiel défini, dans lequel les premier et deuxième éléments de séquençage sont surchargés en reliant les première et deuxième électrodes (92, 94) du premier plan (88) et la troisième électrode (96) du deuxième plan (90) à l'unité d'évaluation (46) par l'intermédiaire du premier élément de séquençage (130) et en reliant les première et deuxième électrodes (92, 94) du premier plan (88) et la troisième électrode (92, 94, 96) du deuxième plan (90) à la borne (128, 150) du premier potentiel défini (150) par l'intermédiaire du deuxième élément de séquençage (132).

2. Générateur de signaux selon la revendication 1, **caractérisé par** une résistance (148) disposée entre la borne (128, 150) du premier potentiel et le deuxième élément de séquençage (132).

3. Générateur de signaux selon la revendication 2, **caractérisé en ce que** ladite une résistance (148) est variable.

4. Générateur de signaux selon l'une des revendications 2 à 3, **caractérisé par** une borne (154) destinée à délivrer un deuxième potentiel, dans lequel la borne du deuxième potentiel est reliée au premier élément de séquençage (130) par l'intermédiaire d'une résistance série (152) en parallèle avec l'unité d'évaluation (46).

5. Générateur de signaux selon la revendication 4, **caractérisé en ce que** la résistance série (152) est variable.

6. Générateur de signaux selon l'une des revendications 1 à 5, **caractérisé par** une première orientation des première et deuxième électrodes (92, 94) et par une deuxième orientation de la troisième électrode (96) et d'une zone intermédiaire (98), dans lequel la zone intermédiaire (98) et les première et deuxième électrodes (92, 94) sont espacées et électriquement isolées les unes des autres dans le premier plan (88).

7. Générateur de signaux selon la revendication 6, **caractérisé par** une autre piste conductrice (102) et par un contact traversant (104), dans lequel l'autre piste conductrice (102) est disposée dans la zone intermédiaire (98) et présente ladite première orientation et le contact traversant (104) relie électriquement l'autre piste conductrice (102) à la troisième électrode (96).

8. Générateur de signaux selon l'une des revendications 1 à 7, **caractérisé en ce que** le premier plan (88) et le deuxième plan (90) sont constitués d'un tissu comportant des fils électriquement conducteurs et électriquement non conducteurs, dans lequel les première, deuxième et troisième électrodes (92, 94, 96) constituées de fil conducteur sont tissées dans le tissu.

9. Générateur de signaux selon l'une des revendications 1 à 8, **caractérisé en ce que** le matériau sensible à la pression (100) est un matériau flexible non électriquement conducteur qui se présente sous la forme d'un tamis et qui se déforme lorsqu'il est soumis à une charge mécanique, de sorte que les première et deuxième électrodes (92, 94) du premier plan (88) peuvent entrer partiellement en contact avec la troisième électrode (96) dans le deuxième plan (90) dans la zone de la charge mécanique.
